# EUROPEAN PATENT APPLICATION

(11) **EP 1 770 579 A2**
(43) Date of publication of application: **04.04.2007**
(21) Application number: 06020753.7
(22) Date of filing: 02.10.2006
(51) Int. Cl.: G06F 21/00

(54) **Data transfer method, data transfer source apparatus, data transfer destination apparatus, storage medium for recording data transfer program and storage medium for recording transferred-data recording program**

(30) Priority: 03.10.2005 JP 2005290573
(71) Applicant: SONY CORPORATION, Tokyo (JP)
(72) Inventor: Iwatsu, Takeshi, Shinagawa-ku, Tokyo (JP)
(74) Representative: Melzer, Wolfgang

(57) **Abstract**

Disclosed herein is a data transfer method which is adopted for transferring content data recorded on a data-transfer source recording medium to a data-transfer destination recording medium and for transferring database data recorded in the data-transfer source recording medium as data including information to be used by an application program for managing musical contents represented by the content data as information on a layer structure of the musical contents in a process to manage the musical contents to the data-transfer destination recording medium. The data transfer method includes the steps of: invalidating; generating; transmitting; recording; and deleting.

## Description

### CROSS REFERENCES TO RELATED APPLICATIONS

The present invention contains subject matter related to Japanese Patent Application JP 2005-290573, filed in the Japanese Patent Office on October 3, 2005, the entire contents of which being incorporated herein by reference.

### BACKGROUND OF THE INVENTION

### 1. Field of the Invention

The present invention relates to a data transfer method, a data transfer source apparatus, a data transfer destination apparatus, a storage medium used for recording a data transfer program and a storage medium used for recording a transferred-data recording program. More particularly, the present invention is properly applicable to a content recording/reproduction apparatus.

### 2. Description of the Related Art

The conventional client terminal transfers only either a content stored in an internal hard disk employed in the terminal or information on a right to use the content to an external storage apparatus. The client terminal may fail, losing the content and the information on the right from the internal hard disk. Thus, when a recovery process needs to be carried out due to such a failure or for another reason, only either the content or the information on the right is transferred back to the internal hard disk from the external storage apparatus, which is used for storing the content or the information on the right as a backup.

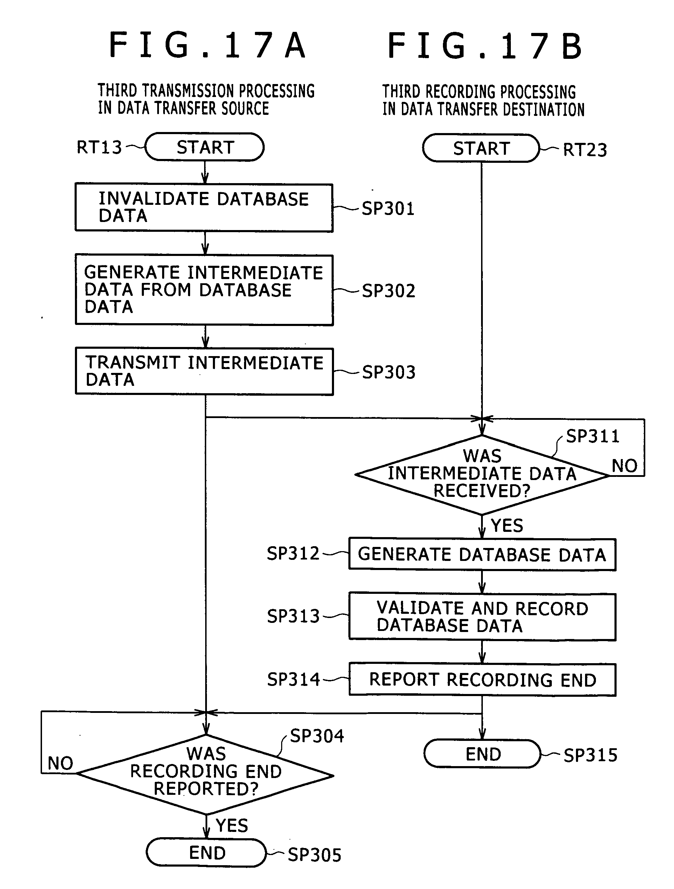

When the client terminal transfers only either the content or the information on the right back to the internal hard disk from the external storage apparatus, the terminal must acquire one of the information on the right and the content, which cannot be transferred from the external storage apparatus, from an external server or the like, and records the information on the right or the content back on the internal hard disk. By carrying out a process of recovery from a failure in this way, the client terminal can again be utilized through use of the content and the information on the right. For more information on this matter, refer to a description on page 25 as well as FIGS. 17, 18 and 19 in patent reference 1, which is Japanese Patent Laid-open No. 2005-107770.

### SUMMARY OF THE INVENTION

By the way, the client terminal with the configuration described above manages a plurality of contents stored in the hard disk by associating the contents with each other in layer structures based on attributes of the contents. Typical attributes of contents include an artist for the content and the genre of the content. As part of processing such as a process to reproduce a piece of content, the client terminal shows a layer structure associating a number of contents with each other to the user as a visible image to allow the user to search the structure for a desired content with ease. By showing a layer structure associating a number of contents with each other to the user in this way, the client terminal is capable of providing the user with an environment making the terminal easy to use.

In accordance with a method adopted by the conventional client terminal and an external storage as a method of transferring a content and information on the right to use the content between the terminal and the storage apparatus, however, information on a layer structure used for managing a number of contents is not transferred from the terminal to the storage apparatus. Thus, when the client terminal transfers contents and information on rights to use the contents back from the external storage apparatus, the terminals misses the information on a layer structure used for managing the contents. As a result, the client terminal is not capable of recreating the original utilization environment at the end of the process to transfer the contents and information on rights to use the contents from the external storage apparatus back to the internal hard disk. That is to say, the method of transferring a content and information on the right to use the content between the terminal and the storage apparatus has a problem that the method makes the client terminal difficult to use.

In order to solve the problems described above, inventors of the present invention have proposed a data transfer method capable of raising the degree of freedom to use a data transfer destination apparatus serving as a destination of a transfer of a content and proposed a data transfer source apparatus, the data transfer destination apparatus, a data transfer program as well as a transferred-data recording program.

In order to solve the problems described above, in accordance with an embodiment of the present invention, there is provided a data transfer method. The method is for transferring content data recorded on a data-transfer source recording medium employed in a data transfer source apparatus as content data including information on rights to use the content data to a data-transfer destination recording medium employed in a data transfer destination apparatus. The method is further for transferring database data also recorded on the data-transfer source recording medium as data including information to be used by an application program for managing musical contents represented by the content data as information on a layer structure of the musical contents in a process to manage the musical contents to the data-transfer destination recording medium. The data transfer method includes a driving step for driving the data transfer source apparatus to carry out: a first invalidation step of invalidating a relation associating the content data recorded on the data-transfer source recording medium with the data transfer source apparatus in order to invalidate the content data; a first-intermediate-data generation step of at least encrypting the invalidated content data in order to generate first intermediate data; and a first-intermediate-data transmitting step of transmitting the first intermediate data to the data transfer destination apparatus. The data transfer method further includes a driving step for driving the data transfer destination apparatus to carry out a first recording step of decrypting the first intermediate data received from the data transfer source apparatus in order to generate the content data and recording the content data onto the data-transfer destination recording medium by associating the content data with the data transfer destination apparatus. The data transfer method further includes a driving step for driving the data transfer source apparatus to carry out: a second invalidation step of invalidating a relation associating the database data recorded on the data-transfer source recording medium with the data transfer source apparatus in order to invalidate the database data; a second-intermediate-data generation step of at least encrypting the invalidated database data in order to generate second intermediate data; and a second-intermediate-data transmitting step of transmitting the second intermediate data to the data transfer destination apparatus. The data transfer method further includes a driving step for driving the data transfer destination apparatus to carry out a second recording step of decrypting the second intermediate data received from the data transfer source apparatus in order to generate the database data and recording the database data onto the data-transfer destination recording medium by associating the database data with the data transfer destination apparatus. The data transfer method further includes a driving step for driving the data transfer source apparatus to carry out: a first deletion step of deleting the content data from the data-transfer source recording medium after a process carried out by the data transfer destination apparatus to record the content data onto the data-transfer destination recording medium; and a second deletion step of deleting the database data from the data-transfer source recording medium after a process carried out by the data transfer destination apparatus to record the database data.onto the data-transfer destination recording medium.

In accordance with the present invention, since the data transfer destination apparatus (which is also referred to in the following description as an apparatus serving as the data transfer source) transfers the content data recorded on the recording medium of its own as content data including information on rights to use musical contents represented by the content data to the recording medium employed in the data transfer destination apparatus (which is also referred to in the following description as an apparatus serving as the data transfer destination), after the transfer of the content data, it is not necessary for the apparatus serving as the data transfer destination to carry out complicated processing such as a process to reacquire either of a musical content and information on a right to use the content from a content providing server or the like.

In addition, since the apparatus serving as the data transfer source also transfers the database data recorded on the recording medium of its own as data including information to be used by an application program for managing musical contents represented by the content data as information on a layer structure of the musical contents in a process to manage the musical contents to the recording medium employed in the apparatus serving as the data transfer destination, the apparatus serving as the data transfer destination is capable of managing the musical contents transferred from the apparatus serving as the data transfer source by using the database data also transferred from the apparatus serving as the data transfer source in execution of the application program for managing the musical contents.

Moreover, after the apparatus serving as the data transfer destination records transferred information such as the content data and the database data onto the recording medium of its own, the apparatus serving as the data transfer source deletes the transferred information from the recording medium employed in the apparatus serving as the data transfer source. Thus, it is possible to avoid illegal use of the transferred information such as the content data and the database data in the apparatus serving as the data transfer source after the processing to transfer the information from the apparatus serving as the data transfer source to the apparatus serving as the data transfer destination.

As a result, in the processing to transfer content data from the apparatus serving as the data transfer source to the apparatus serving as the data transfer destination, the apparatus serving as the data transfer destination is capable of constructing all but the same content utilization environment in the apparatus serving as the data transfer destination as the environment in the apparatus serving as the data transfer source and presenting the constructed content utilization environment to the user.

In order to solve the problems described above, in accordance with another embodiment of the present invention, there is provided a storage medium for storing a data transfer program for transferring content data recorded on a data-transfer source recording medium employed in a data transfer source apparatus as content data including information on rights to use the content data to a data-transfer destination recording medium employed in a data transfer destination apparatus and for transferring database data also recorded on the data-transfer source recording medium as data including information to be used by an application program for managing musical contents represented by the content data as information on a layer structure of the musical contents in a process to manage the musical contents to the data-transfer destination recording medium. The data transfer program includes a driving step for driving the data transfer source apparatus to carry out: a first invalidation step of invalidating a relation associating the content data recorded on the data-transfer source recording medium with the data transfer source apparatus in order to invalidate the content data; a first-intermediate-data generation step of at least encrypting the invalidated content data in order to generate first intermediate data; and a first-intermediate-data transmitting step of transmitting the first intermediate data to the data transfer destination apparatus. The data transfer program further includes a driving step for driving the data transfer destination apparatus to carry out a first recording step of decrypting the first intermediate data received from the data transfer source apparatus in order to generate the content data and recording the content data onto the data-transfer destination recording medium by associating the content data with the data transfer destination apparatus. The data transfer program further includes a driving step for driving the data transfer source apparatus to carry out: a second invalidation step of invalidating a relation associating the database data recorded on the data-transfer source recording medium with the data transfer source apparatus in order to invalidate the database data; a second-intermediate-data generation step of at least encrypting the invalidated database data in order to generate second intermediate data; and a second-intermediate-data transmitting step of transmitting the second intermediate data to the data transfer destination apparatus. The data transfer program further includes a driving step for driving the data transfer destination apparatus to carry out a second recording step of decrypting the second intermediate data received from the data transfer source apparatus in order to generate the database data and recording the database data onto the data-transfer destination recording medium by associating the database data with the data transfer destination apparatus. The data transfer program further includes a driving step for driving the data transfer source apparatus to carry out: a first deletion step of deleting the content data from the data-transfer source recording medium after a process carried out by the data transfer destination apparatus to record the content data onto the data-transfer destination recording medium; and a second deletion step of deleting the database data from the data-transfer source recording medium after a process carried out by the data transfer destination apparatus to record the database data onto the data-transfer destination recording medium.

Thus, it is possible to provide a data transfer method capable of raising the degree of freedom to use a data transfer destination apparatus by constructing all but the same content utilization environment as the environment of the data transfer source apparatus in the data transfer destination apparatus after transferring content data from the data transfer source apparatus to a data transfer destination apparatus and by presenting the content utilization environment to the user, and provide the data transfer destination apparatus, the data transfer destination apparatus, a data transfer program as well as a transferred-data recording program.

### BRIEF DESCRIPTION OF THE DRAWINGS

FIG. 1 is a block diagram showing an outline of a data transfer system provided by the present invention;
FIG. 2 is a diagram showing a rough configuration of a data transfer system according to an embodiment of the present invention;
FIG. 3 is a block diagram showing an embodiment implementing a circuit configuration of functional blocks composing a content recording/reproduction apparatus;
FIG. 4 is a block diagram showing an embodiment implementing a circuit configuration of hardware blocks composing the content recording/reproduction apparatus;
FIG. 5 is a diagram roughly showing a software configuration of the content recording/reproduction apparatus;
FIG. 6 is an explanatory diagram roughly showing various kinds of data held by the content recording/reproduction apparatus;
FIG. 7 is an explanatory diagram showing of a layer structure created for different types of content acquisition as a structure to be used in management of musical contents;
FIG. 8 is an explanatory diagram showing of a layer structure created for the name of an artist as a structure to be used in management of musical contents;
FIG. 9 is an explanatory diagram showing of a layer structure created for a genre as a structure to be used in management of musical contents;
FIG. 10 is an explanatory diagram showing of a layer structure created for a sales year as a structure to be used in management of musical contents;
FIG. 11 is an explanatory diagram showing of a layer structure created for the names of relevant artists as a structure to be used in management of musical contents;
FIG. 12 is an explanatory diagram showing of a layer structure created for relevant genres as a structure to be used in management of musical contents;
FIG. 13 is a rough explanatory diagram referred to in describing data transfer processing;
FIGS. 14A and 14B show a flowchart representing the procedure of the data transfer processing;
FIGS. 15A and 15B show a flowchart representing the procedure of first data transmission processing;
FIGS. 16A and 16B show a flowchart representing the procedure of second data transmission processing;
FIGS. 17A and 17B show a flowchart representing the procedure of third data transmission processing;
FIGS. 18A and 18B show a flowchart representing the procedure of other data transfer processing; and
FIGS. 19A and 19B show a flowchart representing the procedure of other first data transmission processing.

### DETAILED DESCRIPTION OF THE PRFERRED EMBODIMENTS

An embodiment implementing the present invention is explained by referring to diagrams as follows.

### (1) Outline of the Embodiment

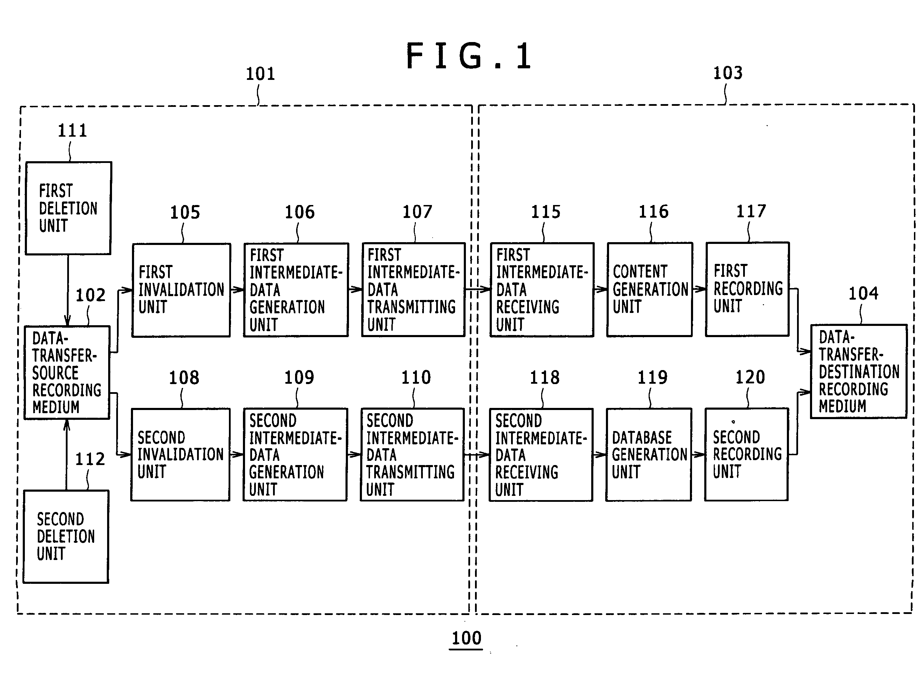

In FIG. 1, reference numeral 100 denotes an entire data transfer system provided by the present invention. In the data transfer system 100, a data transfer source apparatus 101 transmits a content stored on a data-transfer source recording medium 102 employed in the data transfer source apparatus 101 and a database data also recorded on the data-transfer source recording medium 102 to a data transfer destination apparatus 103 to be stored in a data-transfer destination recording medium 104 employed in the data transfer destination apparatus 103. The transmitted content includes information on a right. The transmitted database data includes information on a layer structure of contents. The layer structure of contents is used by an application program for managing the contents. In the actual process to transmit the content from the data transfer source apparatus 101 to the data transfer destination apparatus 103, a first invalidation unit 105 employed in the data transfer source apparatus 101 invalidates the content by invalidating a relation associating the content stored on the data-transfer source recording medium 102 with the data transfer source apparatus 101. In addition, a first intermediate data generation unit 106 employed in the data transfer source apparatus 101 generates first intermediate data by at least encrypting the content invalidated by the first invalidation unit 105. Then, a first intermediate data transmitting unit 107 employed in the data transfer source apparatus 101 actually transmits the first intermediate data generated by the first intermediate data generation unit 106 to the data transfer destination apparatus 103.

In the mean time, in the actual process to transmit the database data from the data transfer source apparatus 101 to the data transfer destination apparatus 103, a second invalidation unit 108 employed in the data transfer source apparatus 101 invalidates the database data by invalidating a relation associating the database data stored on the data-transfer source recording medium 102 with the data transfer source apparatus 101. In addition, a second intermediate data generation unit 109 employed in the data transfer source apparatus 101 generates second intermediate data by at least encrypting the database data invalidated by the second invalidation unit 108. Then, a second intermediate data transmitting unit 110 employed in the data transfer source apparatus 101 actually transmits the second intermediate data generated by the second intermediate data generation unit 109 to the data transfer destination apparatus 103. Subsequently, a first deletion unit 111 employed in the data transfer source apparatus 101 deletes the transmitted content from the data-transfer source recording medium 102 when a process to record the content onto the data-transfer destination recording medium 104 employed in the data transfer destination apparatus 103 is completed. By the same token, a second deletion unit 112 employed in the data transfer source apparatus 101 deletes the transmitted database data from the data-transfer source recording medium 102 when a process to record the database data onto the data-transfer destination recording medium 104 employed in the data transfer destination apparatus 103 is completed.

On the other hand, a first intermediate data receiving unit 115 employed in the data transfer destination apparatus 103 receives the first intermediate data from the data transfer source apparatus 101. As described above, the first intermediate data is generated by the first intermediate data generation unit 106 by at least encrypting the content, which has been invalidated by the first invalidation unit 105 by invalidating a relation associating the content stored on the data-transfer source recording medium 102 with the data transfer source apparatus 101. Then, a content generation unit 116 employed in the data transfer destination apparatus 103 decrypts the first intermediate data received by the first intermediate data receiving unit 115 in order to generate the content. Finally, a first recording unit 117 employed in the data transfer destination apparatus 103 records the content generated by the content generation unit 116 onto the data-transfer destination recording medium 104 by associating the content with the data transfer destination apparatus 103.

In the mean time, a second intermediate data receiving unit 118 employed in the data transfer destination apparatus 103 receives the second intermediate data from the data transfer source apparatus 101. As described above, the second intermediate data is generated by the second intermediate data generation unit 109 by at least encrypting the database data, which has been invalidated by the second invalidation unit 108 by invalidating a relation associating the database data stored on the data-transfer source recording medium 102 with the data transfer source apparatus 101. Then, a database generation unit 119 employed in the data transfer destination apparatus 103 decrypts the second intermediate data received by the second intermediate data receiving unit 118 in order to generate the database data. Finally, a second recording unit 120 employed in the data transfer destination apparatus 103 records the database data generated by the database generation unit 119 onto the data-transfer destination recording medium 104 by associating the database data with the data transfer destination apparatus 103.

### (2) Embodiments

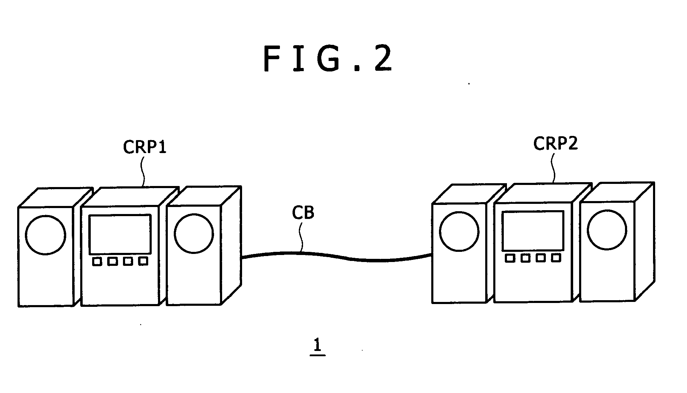

In FIG. 2, reference numeral 1 denotes an entire data transfer system according to the embodiment. In the data transfer system 1, a content recording/reproduction apparatus CRP1 for recording a content onto a recording medium embedded in the content recording/reproduction apparatus CRP1 and reproducing a content from the recording medium is connected to a content recording/reproduction apparatus CRP2 also for recording a content onto a recording medium embedded in the content recording/reproduction apparatus CRP2 and reproducing a content from the recording medium of the content recording/reproduction apparatus CRP2 by using a cable CB so as to allow contents recorded on the content recording/reproduction apparatus CRP1 to be transferred to the content recording/reproduction apparatus CRP2, which has been purchased as an apparatus replacing the content recording/reproduction apparatus CRP1.

In the content transfer system, the two content recording/reproduction apparatus CRP1 and CRP2 have all but the same configuration. Thus, in the following description, only the configuration of the content recording/reproduction apparatus CRP1 is explained concretely and, since the explanation is all but applicable to the configuration of the content recording/reproduction apparatus CRP2, no explanation of the configuration of the content recording/reproduction apparatus CRP2 is given.

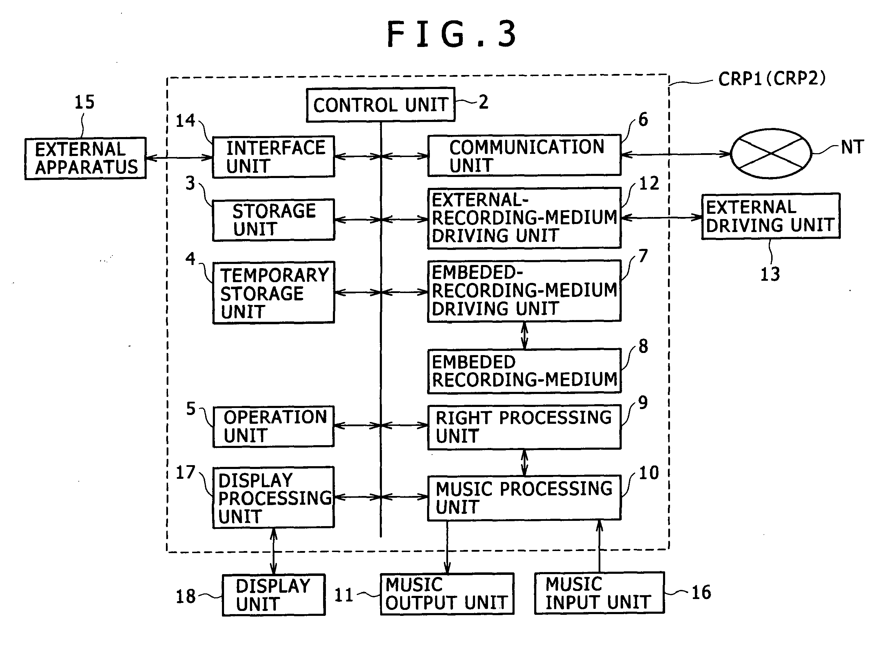

FIG. 3 is a block diagram showing the embodiment implementing a circuit configuration of functional blocks composing the content recording/reproduction apparatus CRP1. A control unit 2 loads a variety of programs read out from a storage unit 3 into a temporary storage unit 4 and executes the programs in order to carry out integrated control of the entire content recording/reproduction apparatus CRP1 and perform various kinds of processing.

For example, when the control unit 2 recognizes an operation carried out by the user on an operation unit 5 as an operation to download a musical content from a content providing server not shown in the figure by way of a network NT, in accordance with the operation, the control unit 2 transmits a signal making a request for the content to the server connected to the network NT by way of a communication unit 6.

Receiving the signal making a request for the musical content from the content recording/reproduction apparatus CRP1, the content providing server carries out a fee charging process to charge a fee to the user of the content recording/reproduction apparatus CRP1 as a fee for the requested musical content and the transmission of the requested musical content. Then, the content providing server transmits musical data and information on a right to use the musical content represented by the musical data to the content recording/reproduction apparatus CRP1 by way of the network NT. Referred to in the following description as encrypted musical data, the transmitted musical data is data obtained as a result of a process to encrypt the requested musical content. The information on a right to use a musical content is information indicating that the recipient of the musical content has the right to use the musical content. By the way, in this case, the information on a right to use a musical content typically includes decryption-key data, a condition for utilization of the musical content and a content utilization state. The decryption-key data is data serving as a source for generating the so-called decryption key to be used for decrypting the encrypted musical data. The condition for utilization of a musical content includes the number of allowed operations to reproduce the musical content and the number of allowed operations to transfer the musical content. The content utilization state includes the number of actually executed operations to reproduce the musical content and the number of actually executed operations to transfer the musical content.

When the control unit 2 employed in the content recording/reproduction apparatus CRP1 receives the encrypted musical data and the information on a right to use the musical content represented by the data from the content providing server by way of the communication unit 6, the control unit 2 stores the data and the information onto an embedded recording medium 8 driven and controlled by an embedded recording medium driving unit 7. In this way, the content recording/reproduction apparatus CRP1 is capable of downloading a musical content from the content providing server connected to the network NT and recording the content onto the embedded recording medium 8.

Then, as the control unit 2 recognizes an operation carried out by the user on the operation unit 5 as an operation to reproduce a musical content recorded on the embedded recording medium 8, in accordance with the operation, the control unit 2 reads out the encrypted musical data of the musical content and information on a right to use the content from the embedded recording medium 8, supplying the information on a right to use the musical content to a right processing unit 9 and the encrypted musical data to a music processing unit 10.

The right processing unit 9 produces a result of determination as to whether or not the right information received from the embedded recording medium 8 is proper. If the result of the determination indicates proper, the right processing unit 9 allows the encrypted musical data to be used (or reproduced in this case) in accordance with the information on a right to use the musical content. In this case, on the basis of information on a right to use the musical content, the right processing unit 9 generates a decryption key for decrypting the encrypted musical data and delivers the key to the music processing unit 10. The right processing unit 9 and the music processing unit 10 are connected to each other by a dedicated route. By delivering the decryption key from the right processing unit 9 to the music processing unit 10 through this dedicated route, it is possible to prevent the key from being acquired by an illegal external recipient illegally.

The music processing unit 10 decrypts the encrypted musical data received from the embedded recording medium 8 by using the decryption key received from the right processing unit 9 in order to generate musical data. Then, the music processing unit 10 carries out sequentially pieces of processing such as a process to decode the musical data in order to produce decoded digital musical data, a process to convert the decoded digital musical data into an analog musical signal and a process to amplify the analog musical signal in order to generate an amplified musical signal. Finally, the music processing unit 10 supplies the amplified musical signal to an external music output unit 11. The music output unit 11 then outputs a musical content based on the amplified musical signal. In this way, the content recording/reproduction apparatus CRP1 is capable of reproducing a musical content recorded on the embedded recording medium 8.

In addition, when the control unit 2 recognizes an operation carried out by the user on the operation unit 5 as an operation to reproduce musical data recorded on an external recording medium 13 controlled and driven by an external recording medium driving unit 12, in accordance with the operation, the control unit 2 reads out the data from the external recording medium 13 and supplies the data to the music processing unit 10. Then, by the same token, the music processing unit 10 carries out sequentially pieces of processing such as a process to decode the musical data in order to produce decoded digital musical data, a process to convert the decoded digital musical data into an analog musical signal and a process to amplify the analog musical signal in order to generate an amplified musical signal. Finally, the music processing unit 10 supplies the amplified musical signal to the external music output unit 11. The music output unit 11 then outputs a musical content based on the amplified musical signal.

On top of that, when the control unit 2 recognizes an operation carried out by the user on the operation unit 5 as an operation to reproduce musical data recorded on an external apparatus 15 connected to an interface unit 14, in accordance with the operation, the control unit 2 reads out the data from the external recording medium 13 and supplies the data to the music processing unit 10. Then, in the same way, the music processing unit 10 carries out sequentially pieces of processing such as a process to decode the musical data in order to produce decoded digital musical data, a process to convert the decoded digital musical data into an analog musical signal and a process to amplify the analog musical signal in order to generate an amplified musical signal. Finally, the music processing unit 10 supplies the amplified musical signal to the external music output unit 11. The music output unit 11 then outputs a musical content based on the amplified musical signal.

Furthermore, when the control unit 2 recognizes an operation carried out by the user on the operation unit 5 as an operation to input an analog musical signal from a music input unit 16 to the music processing unit 10, in accordance with the operation, the control unit 2 controls the music processing unit 10 to receive the signal. Then, the music processing unit 10 carries out sequentially pieces of processing such as an analog-to-digital conversion process, an equalizing process, a digital-to-analog conversion process and an amplification process on the analog musical signal in order to generate an amplified musical signal. Finally, the music processing unit 10 supplies the amplified musical signal to the external music output unit 11. The music output unit 11 then outputs a musical content based on the amplified musical signal.

As described above, the content recording/reproduction apparatus CRP1 is capable of reproducing a musical content recorded on the external recording medium 13 or the external apparatus 15 and a musical content signal input from the music input unit 16. By the way, if the musical content recorded on the external recording medium 13 or the external apparatus 15 is encrypted musical data associated with information on a right to use the content as is the case with a musical content downloaded from the content providing server as described above, the musical content recorded on the external recording medium 13 or the external apparatus 15 is reproduced in the same way as musical data downloaded from the content providing server and recorded on the embedded recording medium 8.

Moreover, when the control unit 2 recognizes an operation carried out by the user on the operation unit 5 as an operation to acquire musical data recorded on the external recording medium 13 or the external apparatus 15, in accordance with the operation, the control unit 2 reads out the data from the external recording medium 13 or the external apparatus 15 and supplies the data to the music processing unit 10. Then, the music processing unit 10 encodes the musical data and encrypts the musical data by using an encryption key received from the right processing unit 9 in order to generate encoded and encrypted musical data. Finally, the music processing unit 10 records the encoded and encrypted musical data onto the embedded recording medium 8 by associating the data with right information generated by the right processing unit 9 as information on a right to use the musical content represented by the data.

In addition, when the control unit 2 recognizes an operation carried out by the user on the operation unit 5 as an operation to input an analog musical signal from the music input unit 16 to the music processing unit 10, in accordance with the operation, the control unit 2 controls the music processing unit 10 to receive the signal from the music input unit 16. Then, the music processing unit 10 carries out sequentially pieces of processing such as an analog-to-digital conversion process and an encoding process on the analog musical signal in order to generate an encoded musical signal. Subsequently, the music processing unit 10 encrypts the encoded musical signal by using an encryption key received from the right processing unit 9 in order to generate encoded and encrypted musical data. Finally, the music processing unit 10 records the encoded and encrypted musical data onto the embedded recording medium 8 by associating the data with right information generated by the right processing unit 9 as information on a right to use the musical content represented by the data.

As described above, the content recording/reproduction apparatus CRP1 is also capable of recording a musical content recorded on the external recording medium 13 or the external apparatus 15 and a musical content input from the music input unit 16 onto the embedded recording medium 8 after carrying out the predetermined processes described above on the musical contents. By the way, the process to encrypt musical data and the process to associate the encrypted musical data with information generated by the right processing unit 9 as information on a right to use the musical content represented by the data can each be carried out as part of the processing to record the data only when necessary, that is, only when the processes are requested by the user for example through an operation carried out by the user on the operation unit 5. That is to say, for example, musical data read out from the external recording medium 13 or the external apparatus 15 can be recorded onto the embedded recording medium 8 as it is without carrying out the process to encrypt musical data and the process to associate the encrypted musical data with information generated by the right processing unit 9 as information on a right to use the musical content represented by the data. As for a musical content input from the music input unit 16, the music processing unit 10 may carry out sequentially pieces of processing such as an analog-to-digital conversion process and an encoding process on the analog musical signal to generate an encoded musical signal. Finally, the music processing unit 10 records the encoded musical data onto the embedded recording medium 8 as it is without associating the data with right information generated by the right processing unit 9 as information on a right to use the musical content represented by the data.

On top of that, when the control unit 2 recognizes an operation carried out by the user on the operation unit 5 as an operation to transfer encrypted musical data recorded on the embedded recording medium 8 to the external recording medium 13 or the external apparatus 15, in accordance with the operation, the control unit 2 reads out the data as well as information on a right to use a musical content represented by the data from the embedded recording medium 8 and records the data and the information onto the external recording medium 13 or the external apparatus 15. In this way, the content recording/reproduction apparatus CRP1 is also capable of transferring a musical content recorded on the embedded recording medium 8 to an external recipient.

The control unit 2 outputs display data based on results of executing a variety of programs loaded from the storage unit 3 to a display processing unit 17. The programs are executed typically to acquire, reproduce, record and transfer a musical content as described above. The display processing unit 17 then displays a screen based on the display data received from the control unit 2 on a display unit 18. In this way, the content recording/reproduction apparatus CRP1 is also capable of showing a variety of screens regarding processing such as the processes to acquire, reproduce, record and transfer a musical content to the user through the display unit 18.

It is to be noted that the music output unit 11, the external apparatus 15, the music input unit 16 and the display unit 18 can each be connected to the content recording/reproduction apparatus CRP1 by using a predetermined cable or directly incorporated in the same cabinet as the content recording/reproduction apparatus CRP1 and internally connected to the content recording/reproduction apparatus CRP1.

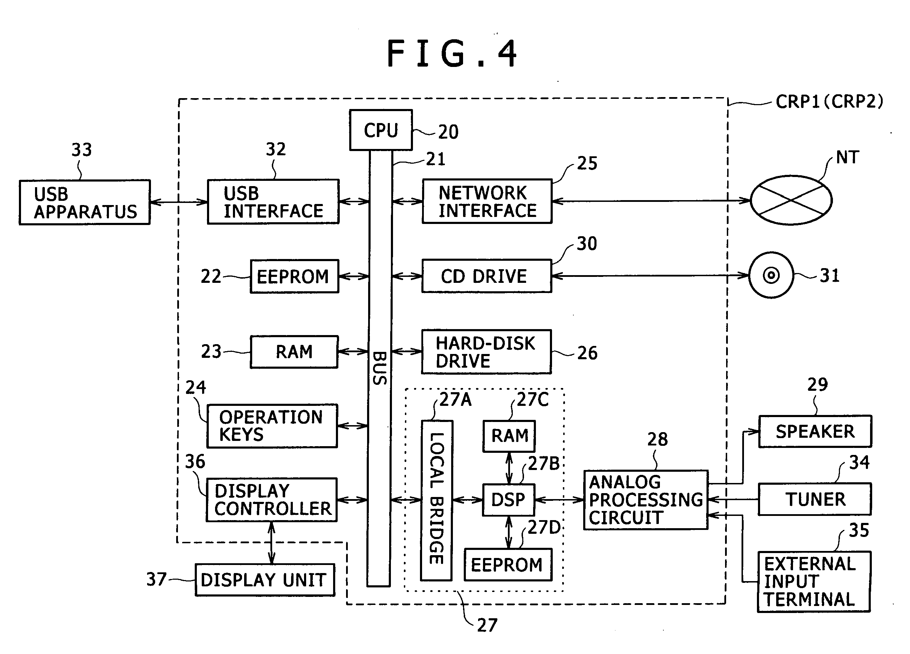

Next, a concrete hardware configuration implementing the configuration of the content recording/reproduction apparatus CRP1 is explained by referring to FIG. 4 as follows. By the way, since the hardware configuration of the content recording/reproduction apparatus CRP2 is all but identical with the hardware configuration of the content recording/reproduction apparatus CRP1, the hardware configuration of the content recording/reproduction apparatus CRP2 is not explained. The content recording/reproduction apparatus CRP1 includes a CPU (Central Processing Unit) 20, an EEPROM (Electronically Erasable and Programmable Read Only Memory) 22 and a RAM (Read Only Memory) 23, which are connected to each other by using a bus 21 also connected to other hardware components. The CPU 20 reads out a variety of programs from the EEPROM 22, loads the programs into the RAM 23 and executes the programs stored in the RAM 23 in order to execute integrated control of all the components of the content recording/reproduction apparatus CRP1.

For example, when the CPU 20 employed in the content recording/reproduction apparatus CRP1 recognizes an operation carried out by the user on operation keys 24, which is provided in the same cabinet of the content recording/reproduction apparatus CRP1 as the CPU 20, as an operation to download a musical content from a content providing server not shown in the figure by way of a network NT, in accordance with the operation, the CPU 20 transmits a signal making a request for the musical content to the server connected to the network NT by way of a network interface 25.

Receiving the signal making a request for the musical content from the content recording/reproduction apparatus CRP1, the content providing server carries out a fee charging process to charge a fee to the user of the content recording/reproduction apparatus CRP1 as a fee for the requested content and the transmission of the requested content. Then, the content providing server transmits musical data and information on a right to use the musical content represented by the data to the content recording/reproduction apparatus CRP1 by way of the network NT. Referred to in the following description as encrypted musical data, the transmitted musical data is data obtained as a result of a process to encrypt the requested musical content. The information on a right to use a musical content is information indicating that the recipient of the musical content has the right to use the musical content. By the way, in this case, the information on a right to use a musical content typically includes decryption-key data, a condition for utilization of the musical content and a content utilization state. The decryption-key data is data serving as a source for generating the so-called decryption key to be used for decrypting the encrypted musical data. The condition for utilization of a musical content includes the number of allowed operations to reproduce the musical content and the number of allowed operations to transfer the musical content. The content utilization state includes the number of actually executed operations to reproduce the musical content and the number of actually executed operations to transfer the musical content.

When the CPU 20 employed in the content recording/reproduction apparatus CRP1 receives the encrypted musical data and the information on a right to use the musical content represented by the data from the content providing server by way of the network interface 25, the CPU 20 stores the data and the information onto a hard-disk drive 26.

In this way, the content recording/reproduction apparatus CRP1 is capable of downloading a musical content from the content providing server connected to the network NT and recording the content into the hard-disk drive 26.

Then, as the CPU 20 recognizes an operation carried out by the user typically on the operation keys 24 as an operation to reproduce a musical content recorded in the hard-disk drive 26, in accordance with the operation, the CPU 20 reads out the encrypted musical data of the musical content and information on a right to use the content from the hard-disk drive 26, supplying the information on a right to use the musical content and the encrypted musical data to a right processing and music processing module 27.

The right processing and music processing module 27 is concealed hardware not transparent from components external to the right processing and music processing module 27. A DSP (Digital Signal Processor) 27B employed in the right processing and music processing module 27 is connected to the bus 21 external to the module by a local bridge 27A. The DSP 27B is also connected to an analog processing circuit 28 external to the right processing and music processing module 27. When the CPU 20 reads out an encrypted firmware instruction provided for the DSP 27B from the hard-disk drive 26 and supplies the instruction to the DSP 27B by way of the local bridge 27A, the DSP 27B once accepts the instruction and then temporarily stores the instruction into a RAM 27C employed in the right processing and music processing module 27. Then, the DSP 27B executes the firmware instruction temporarily stored in the RAM 27C in order to carry out the same digital processing as the right processing unit 9 and the music processing unit 10, which are employed in the content recording/reproduction apparatus CRP1 as described earlier. The right processing and music processing module 27 also includes an EEPROM 27D, which can be accessed by the DSP 27B. The EEPROM 27D is a memory used for storing secret information or the like as information concealed from components external to the right processing and music processing module 27.

In addition to the firmware instruction, as described above, the DSP 27B employed in the right processing and music processing module 27 also receives encrypted musical data and information on a right to use a musical content represented by the data from the hard-disk drive 26 through the local bridge 27A. In a process to execute the firmware instruction described above, the DSP 27B produces a result of determination as to whether or not the information on such a right properly reveals a right to use the musical content. If the result of the determination indicates that the information on such a right properly reveals a right to use the musical content, the DSP 27B allows the encrypted musical data to be used (or reproduced in this case) in accordance with the information on a right to use the musical content. In this case, on the basis of information on a right to use the musical content, the DSP 27B generates a decryption key for decrypting the encrypted musical data and decrypts the encrypted musical data by using the decryption key in order to generate musical data. Then, the DSP 27B carries out digital processing such as a decoding process on the musical data and supplies the musical data completing the digital processing to the analog processing circuit 28.

The analog processing circuit 28 carries out sequentially pieces of analog processing such as a process to convert the digital musical data completing the digital processing into an analog musical signal and a process to amplify the analog musical signal to generate an amplified musical signal. Finally, the analog processing circuit 28 supplies the amplified musical signal to an external speaker 29. The speaker 29 then outputs a musical content based on the amplified musical signal. In this way, the content recording/reproduction apparatus CRP1 is capable of reproducing a musical content recorded in the hard-disk drive 26.

By the same token, when the CPU 20 recognizes an operation carried out by the user typically on the operation keys 24 as an operation to reproduce a musical content recorded a CD 31 mounted on a CD drive 30 employed in the content recording/reproduction apparatus CRP1, in accordance with the operation, the CPU 20 reads out the musical data of the musical content from the CD 31 and supplies the musical data to the right processing and music processing module 27. Then, the right processing and music processing module 27 carries out digital processing such as a decrypting process on the musical data and supplies the musical data completing the digital processing to the analog processing circuit 28. The analog processing circuit 28 carries out sequentially pieces of analog processing such as a process to convert the digital musical data completing the digital processing into an analog musical signal and a process to amplify the analog musical signal to generate an amplified musical signal. Finally, the analog processing circuit 28 supplies the amplified musical signal to an external speaker 29. The speaker 29 then outputs a musical content based on the amplified musical signal.

In the same way, when the CPU 20 recognizes an operation carried out by the user typically on the operation keys 24 as an operation to reproduce a musical content recorded in a USB (Universal Serial Bus) apparatus 33 connected to a USB interface 32 employed in the content recording/reproduction apparatus CRP1, in accordance with the operation, the CPU 20 reads out the musical data of the musical content from the USB apparatus 33 through the USB interface 32 and supplies the musical data to the right processing and music processing module 27. Then, the right processing and music processing module 27 carries out digital processing such as a decoding process on the musical data and supplies the musical data completing the digital processing to the analog processing circuit 28. The analog processing circuit 28 carries out sequentially pieces of analog processing such as a process to convert the digital musical data completing the digital processing into an analog musical signal and a process to amplify the analog musical signal to generate an amplified musical signal. Finally, the analog processing circuit 28 supplies the amplified musical signal to an external speaker 29. The speaker 29 then outputs a musical content based on the amplified musical signal.

In addition, when the CPU 20 recognizes an operation carried out by the user typically on the operation keys 24 as an operation to reproduce a musical content based on a musical analog signal input from a tuner 34 or an external input terminal 35 to the analog processing circuit 28, in accordance with the operation, the CPU 20 controls the analog processing circuit 28 to receive the analog signal from the tuner 34 or the external input terminal 35 respectively and carry out processing including a process to convert the signal into a digital musical signal. Then, the analog processing circuit 28 supplies the digital musical signal to the right processing and music processing module 27, which carries out digital processing such as an equalizing process on the musical data and supplies the musical data completing the digital processing back to the analog processing circuit 28. The analog processing circuit 28 carries out sequentially pieces of analog processing such as a process to convert the digital musical data completing the digital processing into an analog musical signal and a process to amplify the analog musical signal to generate an amplified musical signal. Finally, the analog processing circuit 28 supplies the amplified musical signal to the external speaker 29. The speaker 29 then outputs a musical content based on the amplified musical signal.

As described above, the content recording/reproduction apparatus CRP1 is capable of reproducing a musical content recorded on the CD 31 or the USB apparatus 33 and a musical content signal input from the tuner 34 or the external input terminal 35. By the way, if the musical content recorded on the CD 31 or the USB apparatus 33 is encrypted musical data associated with information on a right to use the content as is the case with a musical content downloaded from the content providing server as described above, the musical content recorded on the CD 31 or the USB apparatus 33 is reproduced in the same way as musical data downloaded from the content providing server and recorded in the hard-disk drive 26.

Moreover, when the CPU 20 recognizes an operation carried out by the user typically on the operation keys 24 as an operation to acquire musical data recorded on the CD 31 or the USB apparatus 33, in accordance with the operation, the CPU 20 reads out the data from the CD 31 or the USB apparatus 33 respectively and supplies the data to the right processing and music processing module 27. Then, the right processing and music processing module 27 encodes the musical data and encrypts the encoded musical data by using an encryption key generated in the right processing and music processing module 27 in order to generate encoded and encrypted musical data. Finally, the right processing and music processing module 27 records the encoded and encrypted musical data onto the hard-disk drive 26 by associating the data with right information generated by the right processing and music processing module 27 itself as information on a right to use the musical content represented by the data.

In addition, when the CPU 20 recognizes an operation carried out by the user typically on the operation keys 24 as an operation to input an analog musical signal from the tuner 34 or the external input terminal 35 to the analog processing circuit 28, in accordance with the operation, the CPU 20 controls the analog processing circuit 28 to receive the signal from the tuner 34 or the external input terminal 35 respectively. Then, the analog processing circuit 28 carries out analog processing such as an analog-to-digital conversion process to convert the analog musical content input into a digital musical signal. Subsequently, the right processing and music processing module 27 carries out digital processing such as an encoding process on the digital musical signal to generate an encoded musical signal. The right processing and music processing module 27 then encrypts the encoded musical signal by using an encryption key generated by the right processing and music processing module 27 itself in order to generate encoded and encrypted musical data. Finally, the right processing and music processing module 27 records the encoded and encrypted musical data onto the hard-disk drive 26 by associating the data with right information generated by the right processing and music processing module 27 itself as information on a right to use the musical content represented by the data.

As described above, the content recording/reproduction apparatus CRP1 is also capable of recording a musical content recorded on the CD 31 or the USB apparatus 33 and a musical content input from the tuner 34 or the external input terminal 35 onto the hard-disk drive 26 after carrying out the predetermined processes described above on the musical contents. By the way, the process to encrypt musical data and the process to associate the encrypted musical data with information generated by the right processing and music processing module 27 as information on a right to use the musical content represented by the data can each be carried out as part of the processing to record the data only when necessary, that is, only when the processes are requested by the user for example through an operation carried out by the user typically on the operation keys 24. That is to say, for example, musical data read out from the CD 31 or the USB apparatus 33 can be recorded onto the hard-disk drive 26 as it is without carrying out the process to encrypt musical data and the process to associate the encrypted musical data with information generated by the right processing and music processing module 27 as information on a right to use the musical content represented by the data. As for an analog musical content input from the tuner 34 or the external input terminal 35, the analog processing circuit 28 carries out an analog-to-digital conversion process to convert the analog musical content input into a digital musical signal and, then, the right processing and music processing module 27 carries out digital processing on the digital musical signal to generate musical data. Finally, the right processing and music processing module 27 records the musical data onto the hard-disk drive 26 as it is without associating the data with right information generated by the right processing and music processing module 27 as information on a right to use the musical content represented by the data.

On top of that, when the CPU 20 recognizes an operation carried out by the user typically on the operation keys 24 as an operation to transfer encrypted musical data recorded on the hard-disk drive 26 to the external CD 31 or the external USB apparatus 33, in accordance with the operation, the CPU 20 reads out the data as well as information on a right to use a musical content represented by the data from the hard-disk drive 26 and records the data and the information onto the CD 31 or the USB apparatus 33. In this way, the content recording/reproduction apparatus CRP1 is also capable of transferring a musical content recorded in the hard-disk drive 26 to an external recipient.

The CPU 20 outputs display data based on results of executing a variety of programs loaded from the EEPROM 22 to a display controller 36. The programs are executed typically to acquire, reproduce, record and transfer a musical content as described above. The display controller 36 then displays a screen based on the display data received from the CPU 20 on a display unit 37. In this way, the content recording/reproduction apparatus CRP1 is also capable of showing a variety of screens regarding processing such as the processes to acquire, reproduce, record and transfer a musical content to the user through the display unit 37.

It is to be noted that the speaker 29, the USB apparatus 33, the tuner 34, the external input terminal 35 and the display unit 37 can each be connected to the content recording/reproduction apparatus CRP1 by using a predetermined cable or directly incorporated in the same cabinet as the content recording/reproduction apparatus CRP1 and internally connected to the content recording/reproduction apparatus CRP1.

By the way, the CPU 20 employed in the content recording/reproduction apparatus CRP1 corresponds to the control unit 2 explained earlier by referring to FIG. 3, the EEPROM 22 corresponds to the storage unit 3, the RAM 23 corresponds to the temporary storage unit 4, the operation keys 24 correspond to the operation unit 5, the network interface 25 corresponds to the communication unit 6, the hard-disk drive 26 corresponds to the embedded recording medium driving unit 7 and the embedded recording medium 8, the right processing and music processing module 27 and the analog processing circuit 28 correspond to the right processing unit 9 and the music processing unit 10, the CD drive 30 corresponds to the external recording medium driving unit 12, the USB interface 32 corresponds to the interface unit 14 and the display controller 36 corresponds to the display processing unit 17.

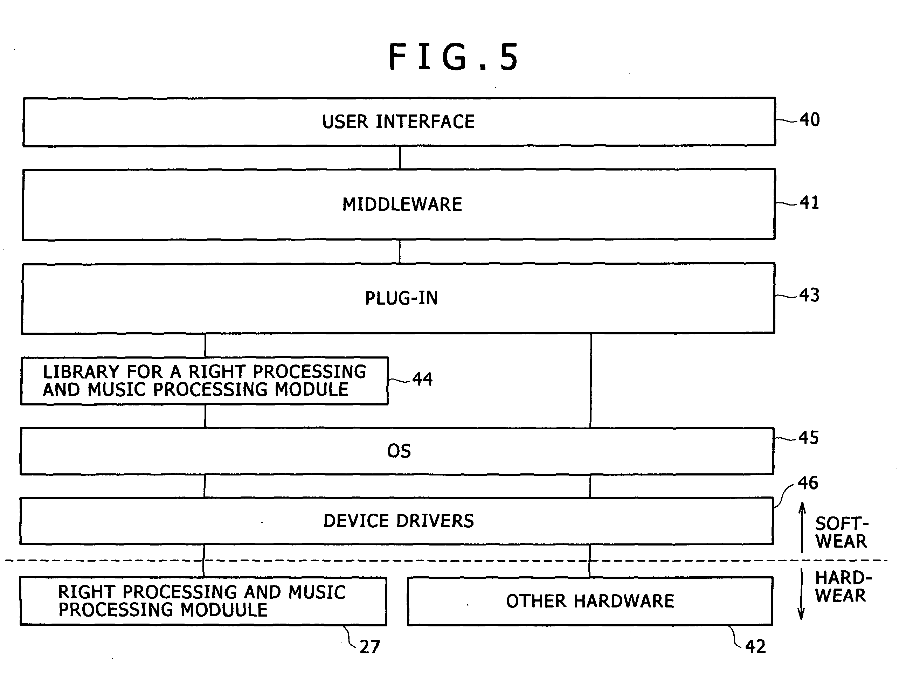

By referring to FIG. 5, the following description explains software employed in the content recording/reproduction apparatus CRP1 having the hardware configuration explained above by referring to FIG. 4. Pieces of software are associated with each other in a layer structure. A piece of software on the top layer of the layer structure is a user interface 40. The user interface 40 is a piece of software for displaying various kinds of information such as a musical-data list on the display unit 37. The user interface 40 also recognizes a variety of commands entered by the user by operating the operation keys 24. Typical commands entered by the user by operating the operation keys 24 are a command to start a process to reproduce a musical content and a command to select a desired musical content.

A piece of software on the layer right below the user interface 40 in the layer structure is middleware 41. The middleware 41 is a piece of software for issuing a processing execution request to the right processing and music processing module 27 and other hardware 42 such as the hard-disk drive 26 and the CD drive 30. The processing execution request is a request processing execution request to carry out various kinds of processing such as the processes described above to acquire, reproduce, record and transfer a musical content. The middleware 41 also manages a variety of databases constructed in the hard-disk drive 26. In addition, the middleware 41 also generates various kinds of information to be displayed on the display unit 37 or to be used for other purposes. The generated information includes a musical-data list recorded on the CD 31 mounted on the CD drive 30, the USB apparatus 33, the hard-disk drive 26 or the like.

A piece of software on the layer right below the middleware 41 in the layer structure is a plug in 43. The plug in 43 is a piece of software for issuing a processing execution command to the right processing and music processing module 27 or the other hardware 42 as a command to carry out various kinds of processing in accordance with a processing execution request made by the middleware 41. In addition, the plug in 43 also carries out a retrieval/recording process to acquire a musical content from a source external to the content recording/reproduction apparatus CRP1 and record the content as it is onto the hard-disk drive 26.

A piece of software on the layer right below the plug in 43 in the layer structure is a right-processing and music-processing module library 44. The right-processing and music-processing module library 44 is a piece of software for converting only the format of some processing execution commands issued by the plug in 43 to the right processing and music processing module 27 into a predetermined format of a processing execution command. The predetermined format of a processing execution command is a command format that can be interpreted by the right processing and music processing module 27. To be more specific, the processing execution commands issued by the plug in 43 to the right processing and music processing module 27 are a command to carry out right processing such as a process to generate a decryption key using information on a right to use a musical content and a command to carry out digital processing such as a process to decrypt or encrypt a musical content.

A piece of software on the layer right below the right-processing and music-processing module library 44 in the layer structure is an OS (Operating System) 45. The OS 45 is a piece of software on which the user interface 40, the middleware 41, the plug in 43 and the right-processing and music-processing module library 44 are executed.

A piece of software on the layer right below the OS 45 in the layer structure is device drivers 46. The device drivers 46 are pieces of software for driving the right processing and music processing module 27 and the other hardware 42 to execute their respective functions in accordance with requests received from the OS 45. The OS 45 issues such a request to one of the device drivers 46 in accordance with a processing execution command issued by the plug in 43 or a processing execution command obtained as a result of a command-format conversion process carried out by the right-processing and music-processing module library 44. In this way, the OS 45 is capable of giving a processing execution command to the right processing and music processing module 27 or the other hardware 42.

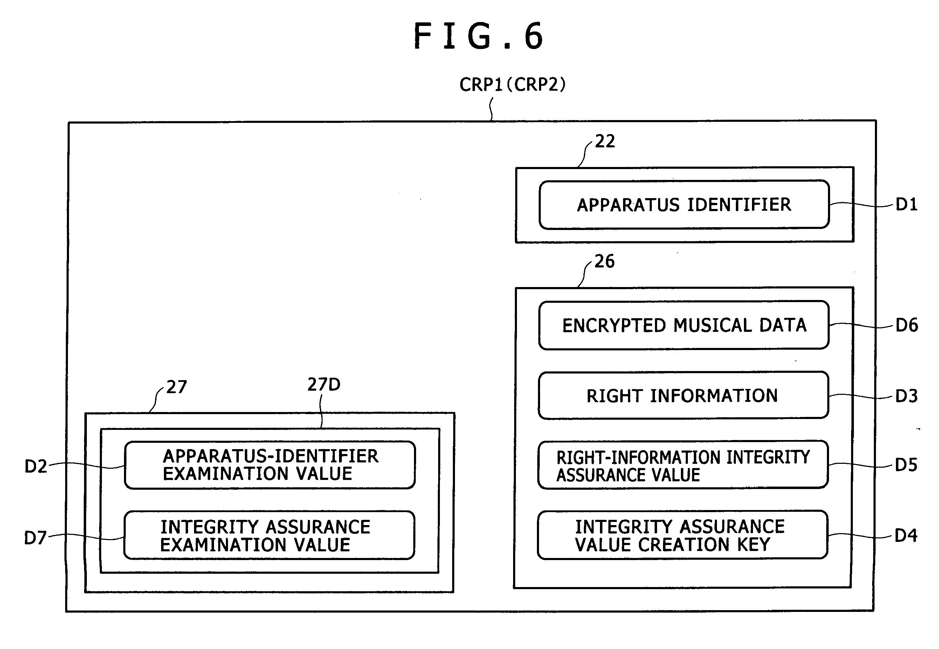

By the way, the content recording/reproduction apparatus CRP1 with the configuration described above prevents illegal use of a musical content protected by a right to use the musical content by adoption of a method described below so that even if the musical content or other data has been illegally copied from the hard-disk drive 26, the copied musical content represented by encrypted musical data associated with information on the right to use the content cannot be illegally utilized by a recipient of the content. Reference numerals shown in FIG. 6 denote respectively the same units denoted by the same reference numerals shown in FIG. 4. For example, when the content recording/reproduction apparatus CRP1 is shipped from a factory, a data-renewal prohibiting area of the EEPROM 22 is used for storing an apparatus identifier D1 for uniquely identifying the content recording/reproduction apparatus CRP1. Thus, the apparatus identifier D1 is different from an apparatus identifier D1 for uniquely identifying the content recording/reproduction apparatus CRP2. In addition, when the content recording/reproduction apparatus CRP1 is shipped from a factory, the EEPROM 27D employed in the right processing and music processing module 27 is used for storing an examination value D2 referred to in the following description as an apparatus-identifier examination value D2. The apparatus-identifier examination value D2 is obtained as a result of a computation process carried out by the DSP 27B employed in the right processing and music processing module 27 by using a first computation method, which is typically a method based on a one-way function, on the apparatus identifier D1 and used in a process of examining the properness of the apparatus identifier D1. By the way, for example, a manufacturing serial number assigned to the content recording/reproduction apparatus CRP1 or the like is typically used as the apparatus identifier D1.

In addition, the hard-disk drive 26 is also used for recording pieces of right information D3. All the pieces of right information D3 are associated with the apparatus identifier D1 stored in the EEPROM 22 to form one piece of data, and this piece of data is encrypted by using an encryption key D4 also recorded on the hard-disk drive 26 in order to generate an integrity assurance value D5, which is also recorded on the hard-disk drive 26 as an integrity assurance value of the pieces of right information D3. In the following description, the integrity assurance value D5 of the pieces of right information D3 is referred to as a right-information integrity assurance value D5. By the way, the encryption key D4 referred to in the following description as an integrity-assurance-value creation key D4 is recorded in the hard-disk drive 26 when the content recording/reproduction apparatus CRP1 is shipped from a factory.

In actuality, each time the CPU 20 employed in the content recording/reproduction apparatus CRP1 as shown in FIG. 4 records a piece of encrypted musical data D6 and the right information D3 associated with the musical data 6 into the hard-disk drive 26, the CPU reads out the apparatus identifier D1 from the EEPROM 22 as well as all the pieces of right information D3 and the integrity-assurance-value creation key D4 from the hard-disk drive 26 and supplies the apparatus identifier D1, all the pieces of right information D3 and the integrity-assurance-value creation key D4 to the right processing and music processing module 27. Then, the DSP 27B employed in the right processing and music processing module 27 encrypts the apparatus identifier D1 and all the pieces of right information D3 by using the integrity-assurance-value creation key D4 to generate a new right-information integrity assurance value D5, and supplies the new right-information integrity assurance value D5 to the CPU 20. As a result, the CPU 20 is capable of updating the previous right-information integrity assurance value D5 already recorded in the hard-disk drive 26 by using the new right-information integrity assurance value D5 received from the right processing and music processing module 27.

In addition, the EEPROM 27D employed in the right processing and music processing module 27 of the CRP1 is used for storing an examination value D7 referred to in the following description as an integrity assurance examination value D7. The integrity assurance examination value D7 is obtained as a result of a computation process carried out by the DSP 27B of the right processing and music processing module 27 by using a second computation method, which is typically a method based on a one-way function, on the D5 and used in a process of examining the properness of the D5.

In actuality, under control executed by the CPU 20, every time a right-information integrity assurance value D5 is generated, the DSP 27B employed in the right processing and music processing module 27 creates a new integrity assurance examination value D7 for the right-information integrity assurance value D5 by carrying out a computation process using a second computation method, and updates the previous integrity assurance examination value D7 recorded in the EEPROM 27D by using the new integrity assurance examination value D7. Thus, in a state allowing the content recording/reproduction apparatus CRP1 to utilize a musical content legally, the right-information integrity assurance value D5 recorded in the hard-disk drive 26 always conforms to the integrity assurance examination value D7 recorded in the EEPROM 27D employed in the right processing and music processing module 27. If the content recording/reproduction apparatus CRP1 is used for example to illegally copy a musical content recorded in the hard-disk drive 26 employed in the other content recording/reproduction apparatus CRP2 to the hard-disk drive 26 employed in the content recording/reproduction apparatus CRP1, on the other hand, the right-information integrity assurance value D5 recorded in the hard-disk drive 26 of the content recording/reproduction apparatus CRP1 no longer conforms to the integrity assurance examination value D7 recorded in the EEPROM 27D employed in the right processing and music processing module 27. Detecting a state in which the right-information integrity assurance value D5 recorded in the hard-disk drive 26 of the content recording/reproduction apparatus CRP1 does not conform to the integrity assurance examination value D7 recorded in the EEPROM 27D employed in the right processing and music processing module 27, the CPU 20 employed in the content recording/reproduction apparatus CRP1 prevents the illegally copied musical content from being illegally utilized in the content recording/reproduction apparatus CRP1.

In addition, as described above, in the content recording/reproduction apparatus CRP1, as each of the first method for computing an apparatus-identifier examination value D2 from an apparatus identifier D1 and a second method for computing an integrity assurance examination value D7 from a right-information integrity assurance value D5, a one-way function is adopted so as to prevent an apparatus identifier D1 from being computed reversely from an apparatus-identifier examination value D2 and a right-information integrity assurance value D5 from being computed reversely from an integrity assurance examination value D7. In addition, as described above, in the content recording/reproduction apparatus CRP1, the apparatus identifier D1 is recorded in a renewal prohibiting area of the EEPROM 22 whereas the apparatus-identifier examination value D2 and the integrity assurance examination value D7 are recorded in the EEPROM 27D employed in the right processing and music processing module 27, which is concealed from components external to the right processing and music processing module 27. Thus, it is possible to prevent the apparatus identifier D1, the apparatus-identifier examination value D2 and the integrity assurance examination value D7 from being renewed illegally by the external components.

In addition, as described above, in the content recording/reproduction apparatus CRP1, the apparatus-identifier examination value D2 and the integrity assurance examination value D7 are each recorded in the EEPROM 27D employed in the right processing and music processing module 27 at a location (or in a data format) known only by typically the manufacturer of the content recording/reproduction apparatus CRP1. It is thus possible to conceal the location of each of the apparatus-identifier examination value D2 and the integrity assurance examination value D7 in the EEPROM 27D employed in the right processing and music processing module 27. As a result, it is possible to prevent any one of the apparatus-identifier examination value D2 and the integrity assurance examination value D7 (that is, the apparatus-identifier examination value D2 or the integrity assurance examination value D7) from being read out illegally from the EEPROM 27D and to always sustain the state of integrity of the apparatus-identifier examination value D2 to the integrity assurance examination value D7.

Thus, in a state allowing the content recording/reproduction apparatus CRP1 to utilize a musical content legally, the apparatus identifier D1 recorded in the EEPROM 22 always conforms to the apparatus-identifier examination value D2 and the integrity assurance examination value D7, which are recorded in the EEPROM 27D employed in the right processing and music processing module 27. If the apparatus identifier D1 recorded in the EEPROM 22 is illegally renewed in the content recording/reproduction apparatus CRP1 for example, the apparatus identifier D1 recorded in the EEPROM 22 no longer conforms to the apparatus-identifier examination value D2 and the integrity assurance examination value D7, which are recorded in the EEPROM 27D employed in the right processing and music processing module 27. Detecting that state enables the CPU 20 to prevent a musical content from being illegally utilized in the content recording/reproduction apparatus CRP1. In other words, the content recording/reproduction apparatus CRP1 strongly associates the apparatus identifier D1 with the right information D3, that is, the content recording/reproduction apparatus CRP1 is tightly coupled with musical contents so that the musical contents are put in a state in which the contents can be used only by the content recording/reproduction apparatus CRP1 and cannot be copied illegally to the other content recording/reproduction apparatus CRP2. This relation strongly associating the content recording/reproduction apparatus CRP1 with musical contents is referred to in the following description as validation of a state of being capable of using contents.

By the way, if a musical content not associated with right information D3 is recorded in the hard-disk drive 26 employed in the content recording/reproduction apparatus CRP1, in place of the right information D3, an integrity assurance value and/or an integrity assurance examination value can be created by using a portion of at least the musical data (or the encrypted musical data) of the musical content and recorded in the hard-disk drive 26 or the EEPROM 27D employed in the right processing and music processing module 27. That is to say, in the content recording/reproduction apparatus CRP1, a musical content not associated with right information D3 can be strongly coupled with the apparatus identifier D1 or, in other words, a musical content not associated with right information D3 can be strongly associated with the content recording/reproduction apparatus CRP1. In this way, the state of being capable of using the musical content in the content recording/reproduction apparatus CRP1 is validated. With such a state validated, the musical content cannot be used in the other content recording/reproduction apparatus CRP2 even if the content is illegally copied to the content recording/reproduction apparatus CRP2.

In addition, an application program for managing musical contents is recorded in advance in the hard-disk drive 26 (or the EEPROM 22) employed in the content recording/reproduction apparatus CRP1. In the following description, such an application program is referred to as a content management program. Thus, the CPU 20 constructs an application database in the hard disk employed in the hard-disk drive 26 as a database to be used for managing and organizing musical contents recorded in the hard-disk drive 26 in accordance with the content management program. In the following description, such a database is referred to as a content management database. Then, each time a musical content is recorded onto the hard-disk drive 26, the CPU 20 acquires information on attributes of the musical content from the content providing server or another source and records the information in the content management database stored in the hard-disk drive 26. The attributes of a musical content include the genre of the content, the name of an artist for the content, the title of the content and the sale year of the content. The genre of a musical content is a genre to which the content pertains.

In addition, in accordance with the content management program, the CPU 20 associates a number of musical contents recorded in the hard-disk drive 26 with each other in a layer structure based on the attributes of the contents, and records information showing the layer structure in the content management database stored in the hard-disk drive 26. In the following description, the information showing the layer structure is referred to as layer structure information. In accordance with the content management program, the CPU 20 manages the musical contents by using the layer structure information stored in the content management database. By the way, the CPU 20 associates a number of musical contents recorded in the hard-disk drive 26 with each other by collecting the contents in a layer structure typically for each layer structure type selected in advance or each type selected by the user, and records the layer structure created for each type in the content management database.

In actuality, every time the CPU 20 newly records a musical content into the hard-disk drive 26, for example, the newly recorded musical content is associated with other previously recorded musical contents in layer structures of different types in accordance with, among others, attributes of the newly recorded musical content. In addition, at that time, the CPU 20 also generates layer structure information, which is information showing each layer structure associating the newly recorded musical content with the other previously recorded musical contents, and uses the newly generated layer structure information for updating information recorded in the content management database as information on layer structures of the same types.

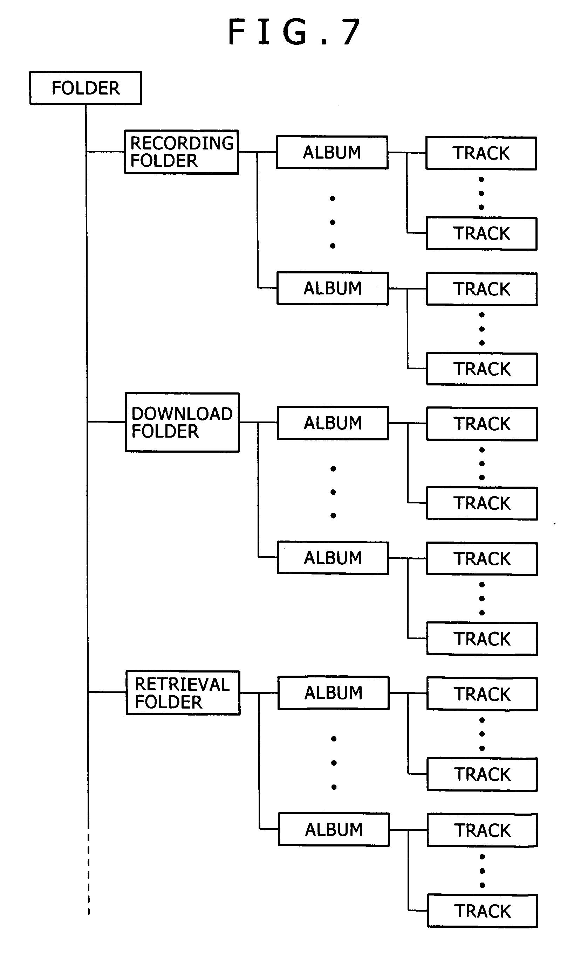

By the way, there are different types of layer structure. These layer structures having different types are each used for associating a number of musical contents with each other. First of all, FIG. 7 is a diagram showing one of the layer structures having different types. The layer structure shown in FIG. 7 reveals ways as to how musical contents have been acquired. On a layer under the folder at the top of the layer structure, there are a recording folder, a download folder and a retrieval folder. The recording folder is a folder used in executing integrated management on musical contents acquired by using the CD 31, the tuner 34 and the external input terminal 35. The download folder is a folder for used in executing integrated management on musical contents acquired by using the content providing server. The retrieval folder is a folder used in executing integrated management on musical contents acquired by using the USB apparatus 33 or the like. On a layer under the recording folder in the layer structure, there are the titles of albums each serving as a collection of musical contents acquired from the CD 31, the tuner 34 and the external input terminal 35. For each of the album titles, recorded musical contents (or recorded tracks) are associated with an album indicated by the title of the album. The recorded musical content is actually the musical data (or the encrypted musical data) of the content. By the same token, on a layer under the download folder in the layer structure, there are the titles of albums each serving as a collection of musical contents acquired from the content providing server. For each of the album titles, recorded musical contents are associated with an album indicated by the title of the album. In the same way, on a layer under the retrieval folder in the layer structure, there are the titles of albums each serving as a collection of musical contents acquired from the USB apparatus 33 or the like. For each of the album titles, recorded musical contents are associated with an album indicated by the title of the album.

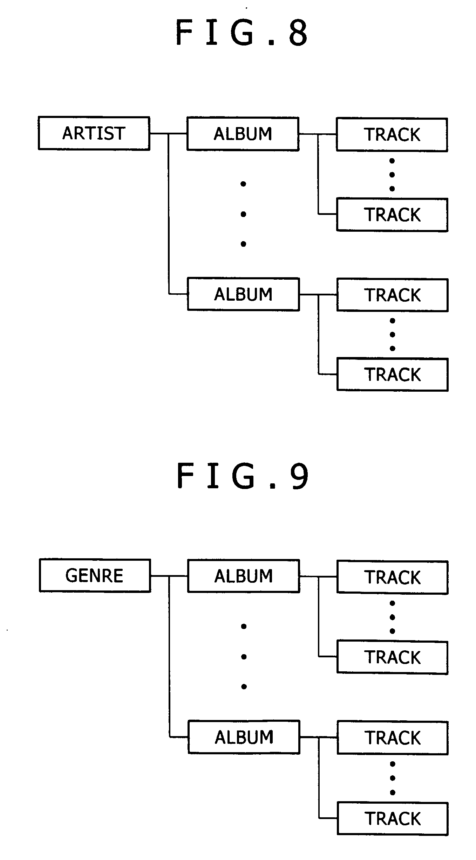

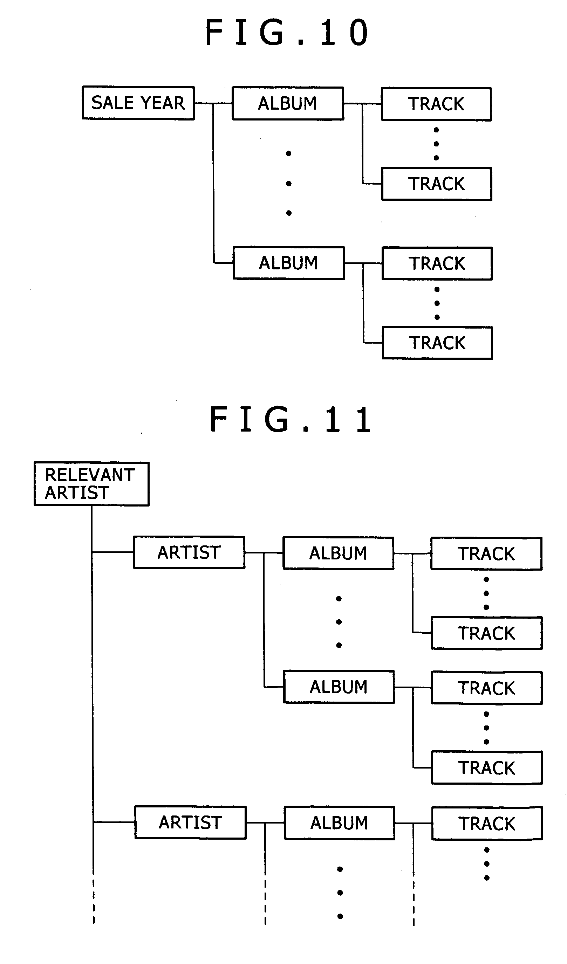

FIGS. 8 to 10 are each a diagram showing a layer structure for associating a number of musical contents with each other for an artist, a genre or a sale year respectively. On a layer under an artist-name folder at the top of the layer structure shown in FIG. 8 for an artist indicated by the artist name, there are the titles of albums each announced by the artist. For each of the album titles, recorded musical contents are associated with an album indicated by the title of the album. By the same token, on a layer under a genre folder at the top of the layer structure shown in FIG. 9 for a genre, there are the titles of albums each pertaining to the genre. For each of the album titles, recorded musical contents are associated with an album indicated by the title of the album. In the same way, a layer under a sale-year folder at the top of the layer structure shown in FIG. 10 for a sale year, there are the titles of albums each sold in the sale year. For each of the album titles, recorded musical contents are associated with an album indicated by the title of the album.

FIG. 11 is an explanatory diagram showing of a layer structure created for the names of relevant artists as a structure to be used in management of musical contents. That is to say, the musical contents are divided into groups each related to an artist. For example, the musical contents are divided into a group relevant to an artist presenting a number of musical contents related to the summer season, a group relevant to an artist presenting a number of ballads and other groups. To put it concretely, a folder of artists is placed at the top of the layer structure as a folder used for managing a plurality of artists each relevant to one of the groups described above. On a layer under the artist folder at the top of the layer structure, there are album folders each created for an artist relevant to one of the groups described above. On a layer under each of the album folders in the layer structure, there are track folders each created for the title of an album announced by the relevant artist. For each of the album titles, recorded musical contents are associated with an album indicated by the title of the album.

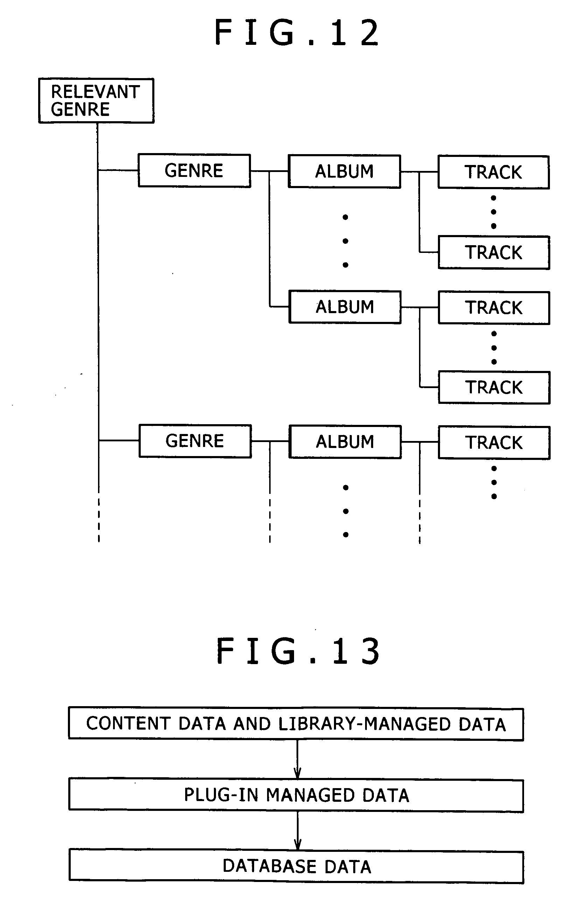

By the same token, FIG. 12 is an explanatory diagram showing of a layer structure created for the relevant genres as a structure to be used in management of musical contents. That is to say, the musical contents are divided into groups each related to a genre. To put it concretely, a folder of genres is placed at the top of the layer structure as a folder used for managing a plurality of genres each relevant to one of the groups cited above. On a layer under the genre folder at the top of the layer structure, there are album folders each created for a genre. On a layer under each of the album folders in the layer structure, there are track folders each created for the title of an album pertaining to the genre. For each of the album titles, recorded musical contents are associated with an album indicated by the title of the album.

By the way, the user is allowed to construct a layer structure for relevant artists by arbitrarily selecting the name of an artist or obtaining the name of an artist from a source such as the content providing server. By the same token, the user is allowed to construct a layer structure for relevant genres by arbitrarily selecting a genre or obtaining a genre from a source such as the content providing server.

In addition, in the content recording/reproduction apparatus CRP1, every time information on attributes of a musical content and/or information on a layer structure are recorded for example onto the content management database stored in the hard-disk drive 26, an integrity assurance value and/or an integrity assurance examination value are created in the same way as the integrity assurance value and/or the integrity assurance examination value for a musical content by using at least a portion of data including the information on attributes of a musical content and the information on a layer structure in the same way as the right information D3 described above. In the following description, the data including the information on attributes of a musical content and the information on a layer structure is referred to as database data due to the fact that the information on attributes of a musical content and the information on a layer structure have been recorded in the content management database. The integrity assurance value and/or the integrity assurance examination value are then recorded in the hard-disk drive 26 or the EEPROM 27D employed in the right processing and music processing module 27. In other words, in the content recording/reproduction apparatus CRP1, the database data is also strongly associated with the apparatus identifier D1, that is, the content recording/reproduction apparatus CRP1 is coupled strongly with the database data so that the database data is valid only in the content recording/reproduction apparatus CRP1 and cannot be used in the other the content recording/reproduction apparatus CRP2 even if the data is illegally copied to the content recording/reproduction apparatus CRP2.

In the case of the content recording/reproduction apparatus CRP1 and the content recording/reproduction apparatus CRP2, for example, the content recording/reproduction apparatus CRP2 may have been newly purchased as a replacement of the content recording/reproduction apparatus CRP1. In this case, in addition to the capabilities offered by the configuration described above, it is also possible to transfer various kinds of data used so far in the content recording/reproduction apparatus CRP1 to the content recording/reproduction apparatus CRP2. When there is a need to transfer various kinds of data recorded in the hard-disk drive 26 employed in the content recording/reproduction apparatus CRP1 serving as a data transfer source to the content recording/reproduction apparatus CRP2 serving as a data transfer destination, various kinds of specific data are selected from the data recorded in the hard-disk drive 26 as shown in FIG. 13 as specific pieces of data to be transferred to the content recording/reproduction apparatus CRP2.

To be more specific, the content recording/reproduction apparatus CRP1 sets musical data (or encrypted musical data) of musical contents as data to be transferred to the content recording/reproduction apparatus CRP2. To put it concretely, in a process to transfer data from the content recording/reproduction apparatus CRP1 to the content recording/reproduction apparatus CRP2, the CPU 20 employed in the content recording/reproduction apparatus CRP1 generates a frame (or a packet) used for storing the musical data (or the encrypted musical data) of a musical content for every piece of music. In the following description, such a frame or such a packet is referred to as content data. Then, if musical data (or encrypted musical data) included in content data is associated with information on a right to use a musical content represented by the musical data (or the encrypted musical data), the CPU 20 also includes the information in the content data as data to be transferred to the content recording/reproduction apparatus CRP2. In addition, the CPU 20 also includes attributes of a musical content represented by the musical data (or the encrypted musical data), which is included in the content data, in the content data. On top of that, if the musical content represented by the musical data (or the encrypted musical data) included in content data is managed in a layer structure based on artists associated with each other arbitrarily as shown in FIG. 11, the CPU 20 also includes the name of a direct artist and a list of the names of artists associated arbitrarily with the direct artist in the layer structure in the content data as data to be transferred to the content recording/reproduction apparatus CRP2. In the following description, the name of a direct artist is referred to as directly related information, which is information directly related to a musical content represented by the musical data (or the encrypted musical data) included in the content data. On the other hand, the list of the names of artists associated arbitrarily with the direct artist is referred to in the following description as indirectly related information, which is information indirectly related to a musical content represented by the musical data (or the encrypted musical data) included in the content data. By the same token, if the musical content represented by the musical data (or the encrypted musical data) included in content data is managed in a layer structure based on genres associated with each other arbitrarily as shown in FIG. 12, the CPU 20 also includes a direct genre and a list of genres associated arbitrarily with the direct genre in the layer structure in the content data as data to be transferred to the content recording/reproduction apparatus CRP2. In the following description, the direct artist is also referred to as directly related information. On the other hand, the list of genres associated arbitrarily with the direct genre is also referred to in the following description as indirectly related information. That is to say, in addition to the musical data (or the encrypted musical data) of a musical content, the CPU 20 employed in the content recording/reproduction apparatus CRP1 also includes the information on a right to use the musical content, attributes of the musical content and information on the layer structure in the content data as data to be transferred to the content recording/reproduction apparatus CRP2. As described above, the information on the layer structure includes the directly related information and the indirectly related information.

In addition, the content recording/reproduction apparatus CRP1 also sets data managed by the right-processing and music-processing module library 44 explained earlier by referring to FIG. 5 as data to be transferred to the content recording/reproduction apparatus CRP2. In the following description, the data managed by the right-processing and music-processing module library 44 is referred to as library-managed data. By the way, the library-managed data includes data used in a process to compute the right-information integrity assurance value (or another integrity assurance value) and integrity assurance examination value. On top of that, the content recording/reproduction apparatus CRP1 also sets data managed by the plug in 43 explained earlier by referring to FIG. 5 as data to be transferred to the content recording/reproduction apparatus CRP2. In the following description, the data managed by the plug in 43 is referred to as plug-in-managed data. By the way, the plug-in-managed data includes data showing a content utilization state described in information on a right to use a musical content as the state of utilization of the content by associating the state with an external apparatus actually used in a process to utilize the content in the same way as data showing the identifier and transfer count of musical data (or encrypted musical data) transferred to the USB apparatus 33 by associating the identifier and the transfer count with an identifier used for uniquely identifying the USB apparatus 33. In this case, the USB apparatus 33 is a typical external apparatus actually used in a process to utilize the musical content. Furthermore, the content recording/reproduction apparatus CRP1 also sets data recorded in the content management database as data to be transferred to the content recording/reproduction apparatus CRP2. In the following description, the data recorded in the content management database is referred to as database data.

As described above, the data to be transferred from the content recording/reproduction apparatus CRP1 to the content recording/reproduction apparatus CRP2 is typically divided into three portions, i.e., the content data and the library-managed data, which serve as the first portion, the plug-in-managed data serving as the second portion and the database data serving as the third portion. Then, the three portions are transferred from the content recording/reproduction apparatus CRP1 to the content recording/reproduction apparatus CRP2 stage by stage starting with a stage of transmitting the content data and the library-managed data. In this case, however, in spite of the fact that the content recording/reproduction apparatus CRP1 serving as the data transfer source has all but the same configuration as the content recording/reproduction apparatus CRP2 serving as the data transfer destination, the content recording/reproduction apparatus CRP2 may have for example a different content management program so that the content recording/reproduction apparatus CRP2 is not capable of handling the database data or the content recording/reproduction apparatus CRP2 may have a plug in 43 with a function different from that of the content recording/reproduction apparatus CRP1 so that the content recording/reproduction apparatus CRP2 is not capable of handling the plug-in-managed data. For such a situation, it is possible to provide a data transfer configuration in which only the content data and the library-managed data are transferred from the content recording/reproduction apparatus CRP1 to the content recording/reproduction apparatus CRP2 at the first stage without transferring the plug-in-managed data at the second stage and the database data at the third stage.

That is to say, data can be transferred from the content recording/reproduction apparatus CRP1 to the content recording/reproduction apparatus CRP2 up to a stage, which is selected among the three stages in accordance with functional compatibility of the content recording/reproduction apparatus CRP2 with respect to the content recording/reproduction apparatus CRP1, in order to limit the types of transferred data to that according to the compatibility. By the way, when the user makes a request to transfer data from the content recording/reproduction apparatus CRP1 serving as the data transfer source to the content recording/reproduction apparatus CRP2 serving as the data transfer destination, the content recording/reproduction apparatus CRP1 and the content recording/reproduction apparatus CRP2 properly set stages of transmitting data in accordance with the request.

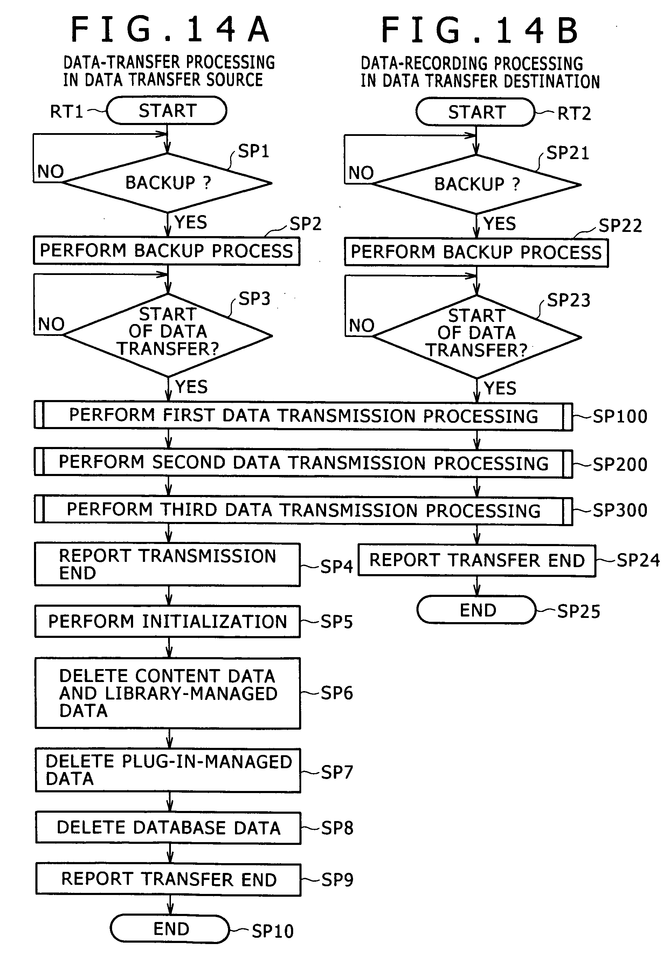

Next, by referring to flowcharts shown in FIGS. 14 to 17, the following description explains the procedures of processing to transfer data from the content recording/reproduction apparatus CRP1 serving as the data transfer source to the content recording/reproduction apparatus CRP2 serving as the data transfer destination. In the explanation of the processing procedures, however, it is assumed that the content recording/reproduction apparatus CRP1 serving as the data transfer source has all but the same configuration as the content recording/reproduction apparatus CRP2 serving as the data transfer destination. That is to say, it is assumed that the content recording/reproduction apparatus CRP2 has for example the same content management program as the content recording/reproduction apparatus CRP1 and has a plug in 43 with a function identical with that of the content recording/reproduction apparatus CRP1. Thus, all the three transmission stages are executed.

For example, when the CPU 20 employed in the content recording/reproduction apparatus CRP1 serving as the data transfer source recognizes an operation carried out by the user typically on the operation keys 24 as an operation to transfer data from the content recording/reproduction apparatus CRP1 to the content recording/reproduction apparatus CRP2 serving as the data transfer destination, in order to implement the operation, in accordance with a data transfer program stored in advance in the hard-disk drive 26 or the EEPROM 22, the CPU 20 starts a data transfer processing procedure RT1 represented by the flowchart shown in FIG. 14A as a procedure provided for the data transfer source. The flowchart representing the data transfer processing procedure RT1 provided for the data transfer source as a procedure to be executed by the CPU 20 employed in the content recording/reproduction apparatus CRP1 serving as the data transfer source begins with a step SP1 at which the CPU 20 is in a state of waiting for a request to be issued by the user as a request to make a backup of various kinds of data recorded in the hard-disk drive 26 employed in the content recording/reproduction apparatus CRP1. As the user enters a request to make a backup of such data via the operation keys 24, the flow of the procedure goes on to the next step SP2. At the step SP2, the CPU 20 employed in the content recording/reproduction apparatus CRP1 serving as the data transfer source creates content data and once stores the data in the hard-disk drive 26. In addition, at the same step, the CPU 20 transfers at least one of the content data, the library-managed data, the plug-in-managed data and the database data, which have been stored in the hard-disk drive 26, to an external recording apparatus. Then, the flow of the procedure goes on to the next step SP3.

At the step SP3, the CPU 20 employed in the content recording/reproduction apparatus CRP1 serving as the data transfer source is in a state of waiting for the user to enter a command to start data transfer processing via the operation keys 24 after connecting the content recording/reproduction apparatus CRP1 to the content recording/reproduction apparatus CRP2 serving as the data transfer destination by using a cable CB. As the user enters a command to start the data transfer processing, the CPU 20 employed in the content recording/reproduction apparatus CRP1 serving as the data transfer source continues the procedure to a step SP100.

In the mean time, the CPU 20 employed in the content recording/reproduction apparatus CRP2 serving as the data transfer destination recognizes an operation carried out by the user typically on the operation keys 24 as an operation to record data transferred from the content recording/reproduction apparatus CRP1 serving as the data transfer source to the content recording/reproduction apparatus CRP2. In order to carry out processing corresponding to the operation, in accordance with a data transfer program stored in advance in the hard-disk drive 26 or the EEPROM 22, the CPU 20 starts a data recording processing procedure RT2 represented by the flowchart shown in FIG. 14B as a procedure provided for the data transfer destination. The flowchart representing the data transfer processing procedure RT2 provided for the data transfer destination as a procedure to be executed by the CPU 20 employed in the content recording/reproduction apparatus CRP2 serving as the data transfer destination begins with a step SP21 at which the CPU 20 is in a state of waiting for a request to be issued by the user as a request to make a backup of various kinds of data recorded in the hard-disk drive 26 employed in the content recording/reproduction apparatus CRP2. As the user enters a request to make a backup of such data via the operation keys 24, the flow of the procedure goes on to the next step SP22. At the step SP22, the CPU 20 employed in the content recording/reproduction apparatus CRP2 serving as the data transfer destination transfers specific data specified by the user in the request to make a backup of the specific data selected from the various kinds of data recorded in the hard-disk drive 26 to an external recording apparatus used for recording the specific data as a backup. Then, the flow of the procedure goes on to the next step SP23.

At the step SP23, the CPU 20 employed in the content recording/reproduction apparatus CRP2 serving as the data transfer destination is in a state of waiting for the user to enter a command to start data recording processing via the operation keys 24 after connecting the content recording/reproduction apparatus CRP2 to the content recording/reproduction apparatus CRP1 serving as the data transfer source by using a cable CB. As the user enters a command to start the data recording processing, the CPU 20 employed in the content recording/reproduction apparatus CRP1 serving as the data transfer source continues the procedure to the step SP100.

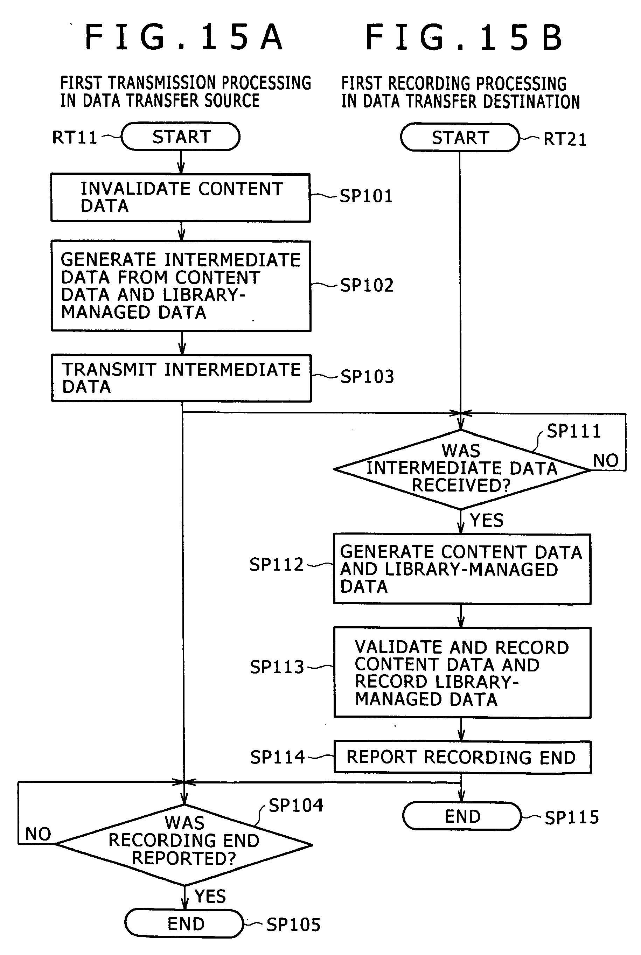

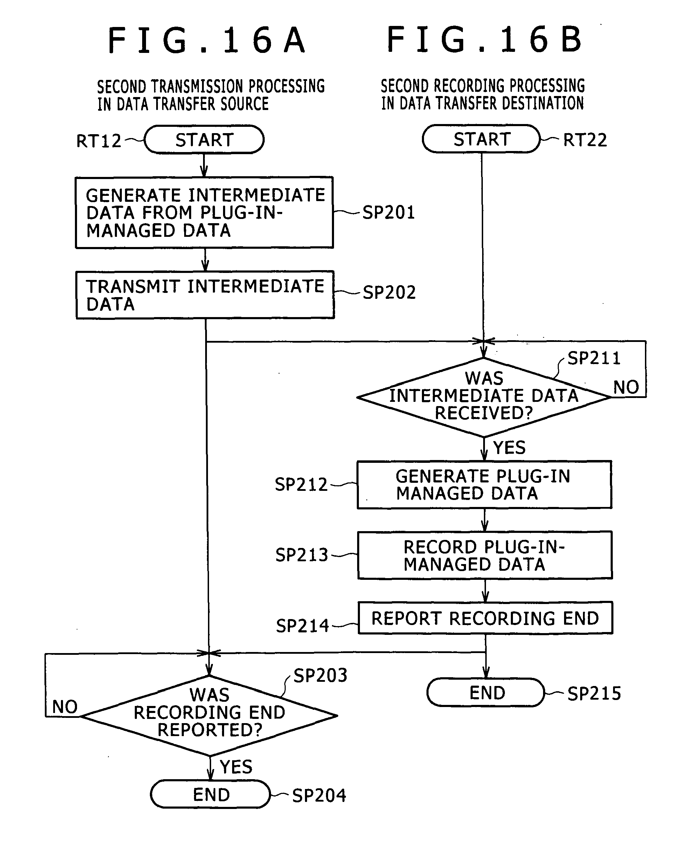

At the step SP100, the CPU 20 employed in the content recording/reproduction apparatus CRP1 serving as the data transfer source and the CPU 20 employed in the content recording/reproduction apparatus CRP2 serving as the data transfer destination carry out a first data transmission processing procedure to be explained later by referring to a flowchart shown in FIG. 15. At this step, the content data and the library-managed data are transferred from the hard-disk drive 26 employed in the content recording/reproduction apparatus CRP1 serving as the data transfer source to the hard-disk drive 26 employed in the content recording/reproduction apparatus CRP2 serving as the data transfer destination. Then, the flow of the data transfer/recording processing procedures goes on to the next step SP200. At the step SP200, the CPU 20 employed in the content recording/reproduction apparatus CRP1 serving as the data transfer source and the CPU 20 employed in the content recording/reproduction apparatus CRP2 serving as the data transfer destination carry out a second data transmission processing procedure to be explained later by referring to a flowchart shown in FIG. 16. At this step, the plug-in-managed data is transferred from the hard-disk drive 26 employed in the content recording/reproduction apparatus CRP1 serving as the data transfer source to the hard-disk drive 26 employed in the content recording/reproduction apparatus CRP2 serving as the data transfer destination. Then, the flow of the data transfer/recording processing procedures goes on to the next step SP300. At the step SP300, the CPU 20 employed in the content recording/reproduction apparatus CRP1 serving as the data transfer source and the CPU 20 employed in the content recording/reproduction apparatus CRP2 serving as the data transfer destination carry out a third data transmission processing procedure to be explained later by referring to a flowchart shown in FIG. 17. At this step, the database data is transferred from the hard-disk drive 26 employed in the content recording/reproduction apparatus CRP1 serving as the data transfer source to the hard-disk drive 26 employed in the content recording/reproduction apparatus CRP2 serving as the data transfer destination. Then, the flow of the data transfer/recording processing procedures exits from the step SP300.

The flow of the data transfer processing procedure RT1 carried out by the CPU 20 employed in the content recording/reproduction apparatus CRP1 serving as the data transfer source goes out from the step SP300 to the next step SP4. At the step SP4, the CPU 20 employed in the content recording/reproduction apparatus CRP1 serving as the data transfer source notifies the user through for example the display unit 37 that the processing to transmit data from the hard-disk drive 26 employed in the content recording/reproduction apparatus CRP1 serving as the data transfer source to the hard-disk drive 26 employed in the content recording/reproduction apparatus CRP2 serving as the data transfer destination has been completed. Then, the flow of the procedure goes on to the next step SP5. At the step SP5, the CPU 20 employed in the content recording/reproduction apparatus CRP1 serving as the data transfer source initializes various kinds of setting following the data transmission processing in accordance with an initialization command, which is entered by the user via the operation keys 24 after the user is notified that the data transmission processing has been completed. Then, the flow of the procedure goes on to the next step SP6.

At the step SP6, assuming that the process carried out by the CPU 20 employed in the content recording/reproduction apparatus CRP2 serving as the data transfer destination to record the content data and the library-managed data into the hard-disk drive 26 of the content recording/reproduction apparatus CRP2 has been completed, the CPU 20 employed in the content recording/reproduction apparatus CRP1 serving as the data transfer source deletes the content data and the library-managed data from the hard-disk drive 26 employed by the content recording/reproduction apparatus CRP1 itself. Then, the flow of the procedure goes on to the next step SP7. At the step SP7, assuming that the process carried out by the CPU 20 employed in the content recording/reproduction apparatus CRP2 serving as the data transfer destination to record the plug-in-managed data into the hard-disk drive 26 of the content recording/reproduction apparatus CRP2 has been completed, the CPU 20 employed in the content recording/reproduction apparatus CRP1 serving as the data transfer source deletes the plug-in-managed data from the hard-disk drive 26 employed by the content recording/reproduction apparatus CRP1 itself. Then, the flow of the procedure goes on to the next step SP8. At the step SP8, assuming that the process carried out by the CPU 20 employed in the content recording/reproduction apparatus CRP2 serving as the data transfer destination to record the database data into the hard-disk drive 26 of the content recording/reproduction apparatus CRP2 has been completed, the CPU 20 employed in the content recording/reproduction apparatus CRP1 serving as the data transfer source deletes database data from the hard-disk drive 26 employed by the content recording/reproduction apparatus CRP1 itself. Then, the flow of the procedure goes on to the next step SP9.

At the step SP9, the CPU 20 employed in the content recording/reproduction apparatus CRP1 serving as the data transfer source notifies the user through for example the display unit 37 that the processing to transfer data from the content recording/reproduction apparatus CRP1 serving as the data transfer source to the content recording/reproduction apparatus CRP2 serving as the data transfer destination has been completed. Then, the flow of the procedure goes on to the next step SP10. At the step SP10, the CPU 20 employed in the content recording/reproduction apparatus CRP1 serving as the data transfer source ends the execution of the data transfer processing procedure RT1.

In the mean time, the flow of the data transfer processing procedure RT1 carried out by the CPU 20 employed in the content recording/reproduction apparatus CRP2 serving as the data transfer destination goes out from the step SP300 to the next step SP24. At the step SP24, the CPU 20 employed in the content recording/reproduction apparatus CRP2 serving as the data transfer destination notifies the user through for example the display unit 37 that the processing to transfer data from the content recording/reproduction apparatus CRP1 serving as the data transfer source to the content recording/reproduction apparatus CRP2 serving as the data transfer destination has been completed. Then, the flow of the procedure goes on to the next step SP25. At the step SP25, the CPU 20 employed in the content recording/reproduction apparatus CRP2 serving as the data transfer destination ends the execution of the data recording processing procedure RT2.

In this way, the CPU 20 employed in the content recording/reproduction apparatus CRP1 serving as the data transfer source and the CPU 20 employed in the content recording/reproduction apparatus CRP2 serving as the data transfer destination end the procedure of all the data transfer processing.

To put it in detail, at the step SP100 cited above, the CPU 20 employed in the content recording/reproduction apparatus CRP1 serving as the data transfer source starts a first data transmission processing procedure RT11 represented by a flowchart shown in FIG. 15A as a procedure provided for the data transfer source. The flowchart representing the first data transmission processing procedure RT11 provided for the data transfer source begins with a step SP101 at which the CPU 20 employed in the content recording/reproduction apparatus CRP1 serving as the data transfer source invalidates a relation associating the content recording/reproduction apparatus CRP1 with musical contents by controlling for example the right processing and music processing module 27 to change the value of the integrity assurance examination value D7 representing the relation associating the content recording/reproduction apparatus CRP1 with the musical contents. That is to say, the CPU 20 employed in the content recording/reproduction apparatus CRP1 serving as the data transfer source puts the content data recorded in the hard-disk drive 26 employed in the content recording/reproduction apparatus CRP1 itself into a state of being unusable by the content recording/reproduction apparatus CRP1. In the following description, a process to put the content data in a state of being unusable is referred to as an invalidation process. As described earlier, the content data recorded in the hard-disk drive 26 is the musical data (or the encrypted musical data) of musical contents recorded in the hard-disk drive 26. Then, the flow of the procedure goes on to the next step SP102.

At the step SP102, the CPU 20 employed in the content recording/reproduction apparatus CRP1 serving as the data transfer source controls typically the right processing and music processing module 27 to at least encrypt the content data invalidated by the right processing and music processing module 27 and the library-managed data in order to generate intermediate data representing the content data and the library-managed data. The intermediate data, which is to be transmitted from the content recording/reproduction apparatus CRP1 serving as the data transfer source to the content recording/reproduction apparatus CRP2 serving as the data transfer destination, is data making the content data and the library-managed data difficult to interpret. Then, the flow of the procedure goes on to the next step SP103. That is to say, the CPU 20 prevents the intermediate data from being used illegally as the content data and the library-managed data even if the intermediate data is illegally stolen by a person in the course of the transmission from the content recording/reproduction apparatus CRP1 serving as the data transfer source to the content recording/reproduction apparatus CRP2 serving as the data transfer destination. At the step SP103, the CPU 20 employed in the content recording/reproduction apparatus CRP1 serving as the data transfer source transmits the intermediate data to the content recording/reproduction apparatus CRP2 serving as the data transfer destination through a cable CB connected to the USB interface 32 or the like. Then, the flow of the procedure goes on to the next step SP104.

In the mean time, at the step SP100 cited above, the CPU 20 employed in the content recording/reproduction apparatus CRP2 serving as the data transfer destination starts a first data recording processing procedure RT21 represented by a flowchart shown in FIG. 15B as a procedure provided for the data transfer destination. The flowchart representing the first data recording processing procedure RT21 provided for the data transfer destination begins with a step SP111 at which the CPU 20 employed in the content recording/reproduction apparatus CRP2 serving as the data transfer destination is in a state of waiting for the intermediate data transmitted by the content recording/reproduction apparatus CRP1 serving as the data transfer source to arrive at the content recording/reproduction apparatus CRP2. As the intermediate data arrives at the USB interface 32 (or another component) employed in the content recording/reproduction apparatus CRP2 serving as the data transfer destination, the CPU 20 employed in the content recording/reproduction apparatus CRP2 accepts the data. Then, the flow of the procedure goes on to the next step SP112. At the step SP112, the CPU 20 employed in the content recording/reproduction apparatus CRP2 serving as the data transfer destination controls typically the right processing and music processing module 27 to decrypt the intermediate data in order to generate the original content data and the original library-managed data. Then, the flow of the procedure goes on to the next step SP113.

At the step SP113, by adoption of the technique described earlier, the CPU 20 employed in the content recording/reproduction apparatus CRP2 serving as the data transfer destination creates a right-information integrity assurance value D5 and an integrity assurance examination value D7 by using its own apparatus identifier D1 recorded in the EEPROM 22 and the right information D3 recorded in the hard-disk drive 26 for the content data generated from the intermediate data, which also includes the library-managed data, recording the right-information integrity assurance value D5 in the hard-disk drive 26 and the integrity assurance examination value D7 in the EEPROM 27D employed in the right processing and music processing module 27. In this way, the CPU 20 validates the content data in the content recording/reproduction apparatus CRP2 serving as the data transfer destination by associating the data with the content recording/reproduction apparatus CRP2 and records the content data in the hard-disk drive 26 employed in the content recording/reproduction apparatus CRP2 itself. As described earlier, the content data is the musical data (or the encrypted musical data) of musical contents recorded in the hard-disk drive 26. At the same step, the CPU 20 also records the library-managed data received along with the content data in the hard-disk drive 26. Then, the flow of the procedure goes on to the next step SP114. At the step SP114, the CPU 20 employed in the content recording/reproduction apparatus CRP2 serving as the data transfer destination gives the content recording/reproduction apparatus CRP1 serving as the data transfer source a notice indicating that the process to record the content data and the library-managed data into the hard-disk drive 26 employed in the content recording/reproduction apparatus CRP2 itself has been completed. Then, the flow of the procedure goes on to the next step SP115. At the step SP115, the CPU 20 employed in the content recording/reproduction apparatus CRP2 serving as the data transfer destination ends the execution of the first data recording processing procedure RT21 provided for the data transfer destination. Then, the flow of the procedure goes on to the next step SP200.

In the mean time, at the step SP104, the CPU 20 employed in the content recording/reproduction apparatus CRP1 serving as the data transfer source is in a state of waiting for a notice to come from the content recording/reproduction apparatus CRP2 serving as the data transfer destination as the notice indicating that the process to record the content data and the library-managed data into the hard-disk drive 26 employed in the content recording/reproduction apparatus CRP2 has been completed. As the CPU 20 employed in the content recording/reproduction apparatus CRP1 serving as the data transfer source receives a notice from the content recording/reproduction apparatus CRP2 serving as the data transfer destination as the notice indicating that the process to record the content data and the library-managed data into the hard-disk drive 26 employed in the content recording/reproduction apparatus CRP2 has been completed, the flow of the procedure goes on to the next step SP105. At the step SP105, the CPU 20 employed in the content recording/reproduction apparatus CRP1 serving as the data transfer source ends the execution of the first data transmission processing procedure RT11 provided for the data transfer source. Then, the flow of the procedure goes on to the next step SP200.

To put it in detail, at the step SP200, the CPU 20 employed in the content recording/reproduction apparatus CRP1 serving as the data transfer source starts a second data transmission processing procedure RT12 represented by a flowchart shown in FIG. 16A as a procedure provided for the data transfer source. The flowchart representing the second data transmission processing procedure RT12 provided for the data transfer source begins with a step SP201 at which the CPU 20 employed in the content recording/reproduction apparatus CRP1 serving as the data transfer source controls typically the right processing and music processing module 27 to at least encrypt the plug-in-managed data recorded in the hard-disk drive 26 employed in the content recording/reproduction apparatus CRP1 itself in order to generate intermediate data representing the plug-in-managed data. The intermediate data, which is to be transmitted from the content recording/reproduction apparatus CRP1 serving as the data transfer source to the content recording/reproduction apparatus CRP2 serving as the data transfer destination, is data making the plug-in-managed data difficult to interpret. Then, the flow of the procedure goes on to the next step SP202. That is to say, the CPU 20 prevents the intermediate data from being used illegally as the plug-in-managed data even if the intermediate data is illegally stolen by a person in the course of the transmission from the content recording/reproduction apparatus CRP1 serving as the data transfer source to the content recording/reproduction apparatus CRP2 serving as the data transfer destination. At the step SP202, the CPU 20 employed in the content recording/reproduction apparatus CRP1 serving as the data transfer source transmits the intermediate data to the content recording/reproduction apparatus CRP2 serving as the data transfer destination through the cable CB connected to the USB interface 32 or the like. Then, the flow of the procedure goes on to the next step SP203.

In the mean time, at the step SP200 cited above, the CPU 20 employed in the content recording/reproduction apparatus CRP2 serving as the data transfer destination starts a second data recording processing procedure RT22 represented by a flowchart shown in FIG. 16B as a procedure provided for the data transfer destination. The flowchart representing the second data recording processing procedure RT22 provided for the data transfer destination begins with a step SP211 at which the CPU 20 employed in the content recording/reproduction apparatus CRP2 serving as the data transfer destination is in a state of waiting for the intermediate data transmitted by the content recording/reproduction apparatus CRP1 serving as the data transfer source to arrive at the content recording/reproduction apparatus CRP2. As the intermediate data arrives at the USB interface 32 (or another component) employed in the content recording/reproduction apparatus CRP2 serving as the data transfer destination, the CPU 20 employed in the content recording/reproduction apparatus CRP2 accepts the data. Then, the flow of the procedure goes on to the next step SP212. At the step SP212, the CPU 20 employed in the content recording/reproduction apparatus CRP2 serving as the data transfer destination controls typically the right processing and music processing module 27 to decrypt the intermediate data in order to generate the original plug-in-managed data. Then, the flow of the procedure goes on to the next step SP213.

At the step SP213, the CPU 20 employed in the content recording/reproduction apparatus CRP2 serving as the data transfer destination records the plug-in-managed data generated from the intermediate data in the hard-disk drive 26 employed in the content recording/reproduction apparatus CRP2 itself. Then, the flow of the procedure goes on to the next step SP214. At the step SP114, the CPU 20 employed in the content recording/reproduction apparatus CRP2 serving as the data transfer destination gives the content recording/reproduction apparatus CRP1 serving as the data transfer source a notice indicating that the process to record the plug-in-managed data into the hard-disk drive 26 employed in the content recording/reproduction apparatus CRP2 itself has been completed. Then, the flow of the procedure goes on to the next step SP215. At the step SP115, the CPU 20 employed in the content recording/reproduction apparatus CRP2 serving as the data transfer destination ends the execution of the second data recording processing procedure RT22 provided for the data transfer destination. Then, the flow of the procedure goes on to the next step SP300.

In the mean time, at the step SP203, the CPU 20 employed in the content recording/reproduction apparatus CRP1 serving as the data transfer source is in a state of waiting for a notice to come from the content recording/reproduction apparatus CRP2 serving as the data transfer destination as the notice indicating that the process to record the plug-in-managed data into the hard-disk drive 26 employed in the content recording/reproduction apparatus CRP2 has been completed. As the CPU 20 employed in the content recording/reproduction apparatus CRP1 serving as the data transfer source receives a notice from the content recording/reproduction apparatus CRP2 serving as the data transfer destination as the notice indicating that the process to record the plug-in-managed data into the hard-disk drive 26 employed in the content recording/reproduction apparatus CRP2 has been completed, the flow of the procedure goes on to the next step SP204. At the step SP204, the CPU 20 employed in the content recording/reproduction apparatus CRP1 serving as the data transfer source ends the execution of the second data transmission processing procedure RT12 provided for the data transfer source. Then, the flow of the procedure goes on to the next step SP300.

To put it in detail, at the step SP300 cited above, the CPU 20 employed in the content recording/reproduction apparatus CRP1 serving as the data transfer source starts a third data transmission processing procedure RT13 represented by a flowchart shown in FIG. 17A as a procedure provided for the data transfer source. The flowchart representing the third data transmission processing procedure RT13 provided for the data transfer source begins with a step SP301 at which the CPU 20 employed in the content recording/reproduction apparatus CRP1 serving as the data transfer source invalidates a relation associating the content recording/reproduction apparatus CRP1 with the database data by controlling for example the right processing and music processing module 27 to change an integrity assurance examination value representing the relation associating the content recording/reproduction apparatus CRP1 with the database data. That is to say, the CPU 20 employed in the content recording/reproduction apparatus CRP1 serving as the data transfer source puts the database data recorded in the hard-disk drive 26 employed in the content recording/reproduction apparatus CRP1 itself into a state of being unusable by the content recording/reproduction apparatus CRP1. Then, the flow of the procedure goes on to the next step SP302.

At the step SP302, the CPU 20 employed in the content recording/reproduction apparatus CRP1 serving as the data transfer source controls typically the right processing and music processing module 27 to at least encrypt the database data invalidated by the right processing and music processing module 27 in order to generate intermediate data representing the database data. The intermediate data, which is to be transmitted from the content recording/reproduction apparatus CRP1 serving as the data transfer source to the content recording/reproduction apparatus CRP2, is data making the database data difficult to interpret. Then, the flow of the procedure goes on to the next step SP303. That is to say, the CPU 20 prevents the intermediate data from being used illegally as the database data even if the intermediate data is illegally stolen by a person in the course of the transmission from the content recording/reproduction apparatus CRP1 serving as the data transfer source to the content recording/reproduction apparatus CRP2 serving as the data transfer destination. At the step SP303, the CPU 20 employed in the content recording/reproduction apparatus CRP1 serving as the data transfer source transmits the intermediate data to the content recording/reproduction apparatus CRP2 serving as the data transfer destination through the cable CB connected to the USB interface 32 or the like. Then, the flow of the procedure goes on to the next step SP304.

In the mean time, at the step SP300 cited above, the CPU 20 employed in the content recording/reproduction apparatus CRP2 serving as the data transfer destination starts a third data recording processing procedure RT23 represented by a flowchart shown in FIG. 17B as a procedure provided for the data transfer destination. The flowchart representing the third data recording processing procedure RT23 provided for the data transfer destination begins with a step SP311 at which the CPU 20 employed in the content recording/reproduction apparatus CRP2 serving as the data transfer destination is in a state of waiting for the intermediate data transmitted by the content recording/reproduction apparatus CRP1 serving as the data transfer source to arrive at the content recording/reproduction apparatus CRP2. As the intermediate data arrives at the USB interface 32 (or another component) employed in the content recording/reproduction apparatus CRP2, the CPU 20 employed in the content recording/reproduction apparatus CRP2 accepts the data. Then, the flow of the procedure goes on to the next step SP312. At the step SP312, the CPU 20 employed in the content recording/reproduction apparatus CRP2 serving as the data transfer destination controls typically the right processing and music processing module 27 to decrypt the intermediate data in order to generate the original database data. Then, the flow of the procedure goes on to the next step SP313.

At the step SP313, by adoption of the technique described earlier, the CPU 20 employed in the content recording/reproduction apparatus CRP2 serving as the data transfer destination creates an integrity assurance value and an integrity assurance examination value for the database data by using its own apparatus identifier D1 recorded in the EEPROM 22 and the database data generated from the intermediate data, recording the integrity assurance value in the hard-disk drive 26 and the integrity assurance examination value in the EEPROM 27D employed in the right processing and music processing module 27. In this way, the CPU 20 employed in the content recording/reproduction apparatus CRP2 serving as the data transfer destination validates the database data in the content recording/reproduction apparatus CRP2 by associating the data with the content recording/reproduction apparatus CRP2. Then, the CPU 20 employed in the content recording/reproduction apparatus CRP2 serving as the data transfer destination records the database data in a database constructed in the hard-disk drive 26 employed in the content recording/reproduction apparatus CRP2 itself. Subsequently, the flow of the procedure goes on to the next step SP314. At the step SP314, the CPU 20 employed in the content recording/reproduction apparatus CRP2 serving as the data transfer destination gives the content recording/reproduction apparatus CRP1 serving as the data transfer source a notice indicating that the process to record the database data into the hard-disk drive 26 employed in the content recording/reproduction apparatus CRP2 itself has been completed. Then, the flow of the procedure goes on to the next step SP315. At the step SP315, the CPU 20 employed in the content recording/reproduction apparatus CRP2 serving as the data transfer destination ends the execution of the third data recording processing procedure RT23 provided for the data transfer destination. Then, the flow of the procedure goes on to the next step SP24.

In the mean time, at the step SP304, the CPU 20 employed in the content recording/reproduction apparatus CRP1 serving as the data transfer source is in a state of waiting for a notice to come from the content recording/reproduction apparatus CRP2 serving as the data transfer destination as the notice indicating that the process to record the database data into the hard-disk drive 26 employed in the content recording/reproduction apparatus CRP2 has been completed. As the CPU 20 employed in the content recording/reproduction apparatus CRP1 serving as the data transfer source receives a notice from the content recording/reproduction apparatus CRP2 serving as the data transfer destination as the notice indicating that the process to record the database data into the hard-disk drive 26 employed in the content recording/reproduction apparatus CRP2 has been completed, the flow of the procedure goes on to the next step SP305. At the step SP305, the CPU 20 employed in the content recording/reproduction apparatus CRP1 serving as the data transfer source ends the execution of the third data transmission processing procedure RT13 provided for the data transfer source. Then, the flow of the procedure goes on to the next step SP4.

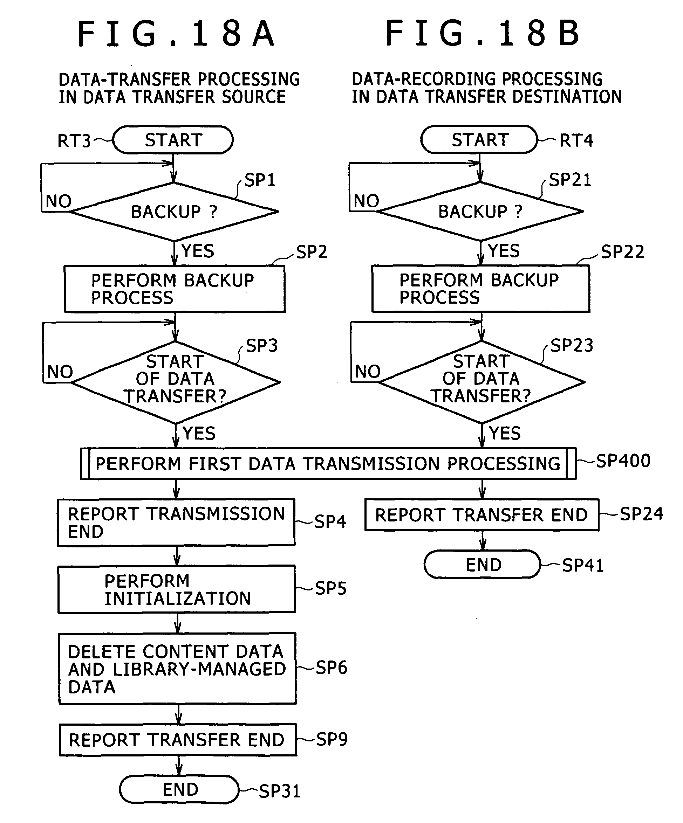

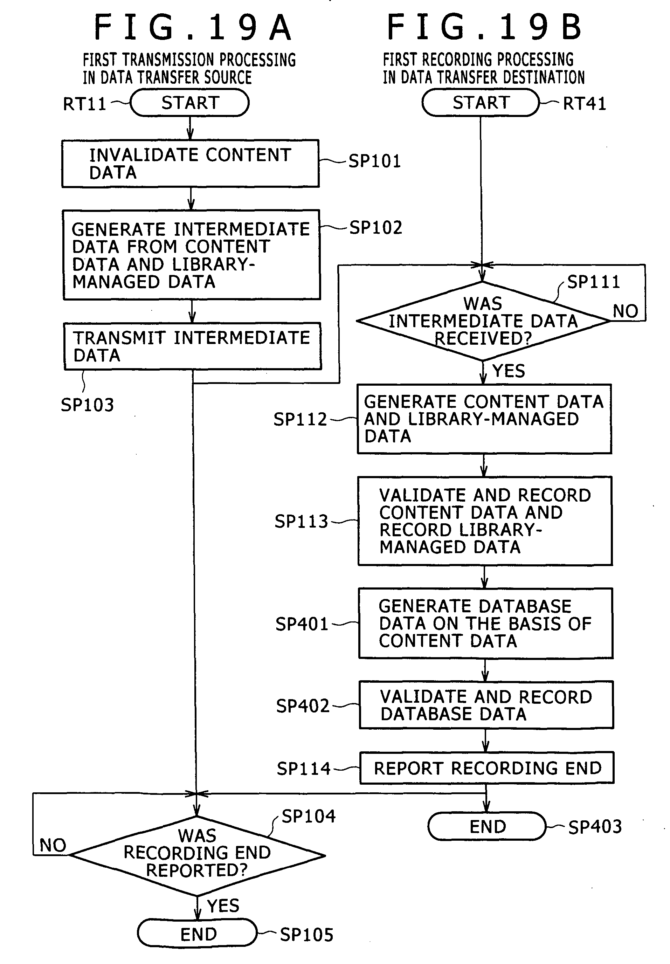

Next, by referring to flowcharts shown in FIGS. 18 and 19, the following description explains the procedures of other processing to transfer data from the content recording/reproduction apparatus CRP1 serving as the data transfer source to the content recording/reproduction apparatus CRP2 serving as the data transfer destination. In the flowchart shown in FIG. 18, steps corresponding to their respective counterparts of the flowchart shown in FIG. 14 are denoted by the same step numbers as the counterparts. By the same token, in the flowchart shown in FIG. 19, steps corresponding to their respective counterparts of the flowchart shown in FIG. 15 are denoted by the same step numbers as the counterparts. In the case of the procedures of the other data transfer processing to be explained below, however, the content management program and the plug in 43, which are employed in the content recording/reproduction apparatus CRP1 serving as the data transfer source, are different from those employed in the content recording/reproduction apparatus CRP2 serving as the data transfer destination. Thus, the content recording/reproduction apparatus CRP2 serving as the data transfer destination is not capable of handling the database data and the plug-in-managed data, which are used in the content recording/reproduction apparatus CRP1 serving as the data transfer source. For this reason, only the first data transmission processing of the first stage is carried out.

For example, the CPU 20 employed in the content recording/reproduction apparatus CRP1 serving as the data transfer source recognizes an operation carried out by the user typically on the operation keys 24 as an operation to transfer data from the content recording/reproduction apparatus CRP1 to the content recording/reproduction apparatus CRP2 serving as the data transfer destination. In order to carry out processing corresponding to the operation, in accordance with a data transfer program stored in advance in the hard-disk drive 26 or the EEPROM 22, the CPU 20 starts a data transfer processing procedure RT3 represented by the flowchart shown in FIG. 18A as a procedure provided for the data transfer source. The flowchart representing the data transfer processing procedure RT3 provided for the data transfer source begins with the step SP1. After the CPU 20 employed in the content recording/reproduction apparatus CRP1 serving as the data transfer source sequentially carries out the processes of the steps SP1 to SP3 described earlier, the flow of the procedure goes on to the next step SP400.

In the mean time, the CPU 20 employed in the content recording/reproduction apparatus CRP2 serving as the data transfer destination recognizes an operation carried out by the user typically on the operation keys 24 as an operation to record data transferred from the content recording/reproduction apparatus CRP1 serving as the data transfer source to the content recording/reproduction apparatus CRP2. In order to carry out processing corresponding to the operation, in accordance with a data transfer program stored in advance in the hard-disk drive 26 or the EEPROM 22, the CPU 20 starts a data recording processing procedure RT4 represented by the flowchart shown in FIG. 18B as a procedure provided for the data transfer destination. The flowchart representing the data recording processing procedure RT4 provided for the data transfer destination begins with the step SP21. After the CPU 20 employed in the content recording/reproduction apparatus CRP2 serving as the data transfer destination sequentially carries out the processes of the steps SP21 to SP23 described earlier, the flow of the procedure goes on to the next step SP400.

To put it in detail, at the step SP400 cited above, the CPU 20 employed in the content recording/reproduction apparatus CRP1 serving as the data transfer source starts a first data transmission processing procedure RT11 represented by a flowchart shown in FIG. 19A as a procedure provided for the data transfer source. The flowchart representing the first data transmission processing procedure RT11 provided for the data transfer source begins with the step SP101. After the CPU 20 employed in the content recording/reproduction apparatus CRP1 serving as the data transfer source sequentially carries out the processes of the steps SP101 to SP104 described earlier, the flow of the procedure goes on to the next step SP105 at which the CPU 20 ends the execution of the first data transmission processing procedure RT11. In this way, the CPU 20 employed in the content recording/reproduction apparatus CRP1 serving as the data transfer source exits from the first data transmission processing procedure of the step SP400 of the flowchart shown in FIG. 18, sequentially carrying out the processes of the steps SP4, SP5, SP6 and SP9 of the flowchart described earlier by referring to FIG. 14. Then, at the last step SP31, the CPU 20 employed in the content recording/reproduction apparatus CRP1 serving as the data transfer source ends the execution of the data transmit processing procedure RT3 provided for the data transfer source.

In the mean time, at the step SP400 cited above, the CPU 20 employed in the content recording/reproduction apparatus CRP2 serving as the data transfer destination starts a first data recording processing procedure RT41 represented by a flowchart shown in FIG. 19B as a procedure provided for the data transfer destination. The flowchart representing the first data recording processing procedure RT41 provided for the data transfer destination begins with a step SP111. After the CPU 20 employed in the content recording/reproduction apparatus CRP2 serving as the data transfer destination sequentially carries out the processes of the steps SP111 to SP113 described earlier, the flow of the procedure goes on to the next step SP401. At the step SP401, the CPU 20 employed in the content recording/reproduction apparatus CRP2 serving as the data transfer destination executes a content management program installed in the content recording/reproduction apparatus CRP2 itself in order to generate database data adapted to the content management program on the basis of content data recorded in the hard-disk drive 26 employed in the content recording/reproduction apparatus CRP2 itself. To put it concretely, on the basis of attributes included in the content data, first of all, the CPU 20 employed in the content recording/reproduction apparatus CRP2 serving as the data transfer destination generates for example layer structure information explained earlier as information on the layer structures shown in FIGS. 8 to 10. As another example, on the basis of attributes included in the content data, the CPU 20 employed in the content recording/reproduction apparatus CRP2 serving as the data transfer destination also generates for example layer structure information explained earlier as information on the layer structures shown in FIGS. 11 and 12. Then, the CPU 20 employed in the content recording/reproduction apparatus CRP2 serving as the data transfer destination collects these pieces of information on layer structures and the attributes included in the content data to generate the database data conforming to its own content management program. Subsequently, the flow of the procedure goes on to the next step SP402.

At the step SP402, by adoption of the technique described earlier, the CPU 20 employed in the content recording/reproduction apparatus CRP2 serving as the data transfer destination creates an integrity assurance value and an integrity assurance examination value for the database data by using its own apparatus identifier D1 recorded in the EEPROM 22 and the database data generated as database data conforming to its own content management program, recording the integrity assurance value in the hard-disk drive 26 and the integrity assurance examination value in the EEPROM 27D employed in the right processing and music processing module 27. In this way, the CPU 20 employed in the content recording/reproduction apparatus CRP2 serving as the data transfer destination validates the database data in the content recording/reproduction apparatus CRP2 by associating the data with the content recording/reproduction apparatus CRP2. Then, the CPU 20 employed in the content recording/reproduction apparatus CRP2 serving as the data transfer destination records the database data in a database constructed in the hard-disk drive 26 employed in the content recording/reproduction apparatus CRP2 itself in accordance with the content management program of its own. Subsequently, the flow of the procedure goes on to the next step SP114. At the step SP114, the CPU 20 employed in the content recording/reproduction apparatus CRP2 serving as the data transfer destination gives the content recording/reproduction apparatus CRP1 serving as the data transfer source a notice indicating that the process to record the data into the hard-disk drive 26 employed in the content recording/reproduction apparatus CRP2 itself has been completed. Then, the flow of the procedure goes on to the next step SP403. At the step SP403, the CPU 20 employed in the content recording/reproduction apparatus CRP2 serving as the data transfer destination ends the execution of the first data recording processing procedure RT41 provided for the data transfer destination. Then, the flow of the procedure goes on to the next step SP24 of the flowchart shown in FIG. 18B. In this way, the CPU 20 employed in the content recording/reproduction apparatus CRP2 serving as the data transfer destination exits from the first data transmission processing procedure of the step SP400 of the flowchart shown in FIGS. 18A and 18B, carrying out the process of the step SP24 of the flowchart described earlier by referring to FIG. 14B. Then, at the last step SP41, the CPU 20 employed in the content recording/reproduction apparatus CRP2 serving as the data transfer destination ends the execution of the data recording processing procedure RT4 provided for the data transfer destination.

By the way, the content recording/reproduction apparatus CRP1 serving as the data transfer source and the content recording/reproduction apparatus CRP2 serving as the data transfer destination are also capable of carrying out the data transfer processing including also the second data transmission processing besides the first data transmission processing. That is to say, in this case, the content recording/reproduction apparatus CRP1 serving as the data transfer source is also capable of transferring the content data, the library-managed data and the plug-in-managed data to the content recording/reproduction apparatus CRP2 serving as the data transfer destination. In addition, if the second data transmission processing is included, in the data transmission processing of the first stage, the content recording/reproduction apparatus CRP2 serving as the data transfer destination is also capable of generating database data for the content management program owned by the content recording/reproduction apparatus CRP2 itself.

In the configuration described above, the content recording/reproduction apparatus CRP1 serving as the data transfer source in the data transfer system 1 invalidates content data recorded in the hard-disk drive 26 of its own as content data including information on rights to use musical contents represented by the content data and encrypts the invalidated content data and library-managed data also recorded on the hard-disk drive 26 in order to generate intermediate data. The content recording/reproduction apparatus CRP1 serving as the data transfer source then transmits the intermediate data to the content recording/reproduction apparatus CRP2 serving as the data transfer destination. Receiving the intermediate data from the content recording/reproduction apparatus CRP1 serving as the data transfer source, the content recording/reproduction apparatus CRP2 serving as the data transfer destination decrypts the intermediate data in order to generate the original content data and the original library-managed data. Then, the content recording/reproduction apparatus CRP2 serving as the data transfer destination validates the content data and records the content data as well as the library-managed data into the hard-disk drive 26 of its own.

In addition, the content recording/reproduction apparatus CRP1 serving as the data transfer source in the data transfer system 1 also encrypts plug-in-managed data recorded in the hard-disk drive 26 in order to generate intermediate data, and transmits the intermediate data to the content recording/reproduction apparatus CRP2 serving as the data transfer destination. Receiving the intermediate data from the content recording/reproduction apparatus CRP1 serving as the data transfer source, the content recording/reproduction apparatus CRP2 serving as the data transfer destination decrypts the intermediate data in order to generate the original plug-in-managed data. Then, the content recording/reproduction apparatus CRP2 serving as the data transfer destination records the plug-in-managed data into the hard-disk drive 26 of its own.

On top of that, the content recording/reproduction apparatus CRP1 serving as the data transfer source in the data transfer system 1 also invalidates database data recorded in the hard-disk drive 26 of its own as data usable to a content management program and encrypts the invalidated database data in order to generate intermediate data. The content recording/reproduction apparatus CRP1 serving as the data transfer source then transmits the intermediate data to the content recording/reproduction apparatus CRP2 serving as the data transfer destination. Receiving the intermediate data from the content recording/reproduction apparatus CRP1 serving as the data transfer source, the content recording/reproduction apparatus CRP2 serving as the data transfer destination decrypts the intermediate data in order to generate the original database data. Then, the content recording/reproduction apparatus CRP2 serving as the data transfer destination validates the database data and records the database data into the hard-disk drive 26 of its own.

Furthermore, after the content recording/reproduction apparatus CRP2 serving as the data transfer destination records the content data, the library-managed data, the plug-in-managed data and the database data into the hard-disk drive 26 of its own, the content recording/reproduction apparatus CRP1 serving as the data transfer source deletes the content data, the library-managed data, the plug-in-managed data and the database data from the hard-disk drive 26 employed in the content recording/reproduction apparatus CRP1.

Since the content recording/reproduction apparatus CRP1 serving as the data transfer source in the data transfer system 1 transfers the content data recorded in the hard-disk drive 26 of its own as content data including information on rights to use musical contents represented by the content data to the hard-disk drive 26 employed in the content recording/reproduction apparatus CRP2 serving as the data transfer destination, after the transfer of the content data, it is not necessary for the content recording/reproduction apparatus CRP2 serving as the data transfer destination to carry out complicated processing such as a process to acquire either of a musical content and information on a right to use the content from a content providing server or the like. In addition, since the content recording/reproduction apparatus CRP1 serving as the data transfer source in the data transfer system 1 also transfers the database data recorded in the hard-disk drive 26 of its own as data including information to be used by a content management program as information on layer structures in a process to manage musical contents to the hard-disk drive 26 employed in the content recording/reproduction apparatus CRP2 serving as the data transfer destination, the content recording/reproduction apparatus CRP2 is capable of managing musical contents transferred from the content recording/reproduction apparatus CRP1 by using the database data also transferred from the content recording/reproduction apparatus CRP1 in execution of the content management program of the content recording/reproduction apparatus CRP2.

Moreover, after the content recording/reproduction apparatus CRP2 serving as the data transfer destination records transferred information such as the content data and the database data into the hard-disk drive 26 of its own, the content recording/reproduction apparatus CRP1 serving as the data transfer source deletes the transferred information from the hard-disk drive 26 employed in the content recording/reproduction apparatus CRP1. Thus, it is possible to avoid illegal use of the transferred information such as the content data and the database data in the content recording/reproduction apparatus CRP1 serving as the data transfer source after the processing to transfer the information from the content recording/reproduction apparatus CRP1 to the content recording/reproduction apparatus CRP2 serving as the data transfer destination. As a result, in the processing to transfer content data from the content recording/reproduction apparatus CRP1 serving as the data transfer source to the content recording/reproduction apparatus CRP2 serving as the data transfer destination, the data transfer system 1 is capable of constructing all but the same content utilization environment in the content recording/reproduction apparatus CRP2 as the environment in the content recording/reproduction apparatus CRP1 and presenting the constructed content utilization environment to the user.

In accordance with the configuration described above, in the data transfer system 1, the content recording/reproduction apparatus CRP1 serving as the data transfer source transfers content data recorded in the hard-disk drive 26 of its own as content data including information on rights to use musical contents represented by the content data to the content recording/reproduction apparatus CRP2 serving as the data transfer destination to be recorded into the hard-disk drive 26 employed in the content recording/reproduction apparatus CRP2. In addition, the content recording/reproduction apparatus CRP1 serving as the data transfer source also transfers database data recorded in the hard-disk drive 26 of its own to the content recording/reproduction apparatus CRP2 serving as the data transfer destination to be recorded into the hard-disk drive 26 employed in the content recording/reproduction apparatus CRP2. When processes carried out by the content recording/reproduction apparatus CRP2 serving as the data transfer destination to record the content data and the database data into the hard-disk drive 26 of its own are completed, the content recording/reproduction apparatus CRP1 serving as the data transfer source deletes the content data and the database data from the hard-disk drive 26 employed by the content recording/reproduction apparatus CRP1 itself. Thus, in the processing to transfer content data from the content recording/reproduction apparatus CRP1 serving as the data transfer source to the content recording/reproduction apparatus CRP2 serving as the data transfer destination, the data transfer system 1 is capable of constructing all but the same content utilization environment in the content recording/reproduction apparatus CRP2 as the environment in the content recording/reproduction apparatus CRP1. As a result, the data transfer system 1 is capable of raising the degree of freedom to use the content recording/reproduction apparatus CRP2 serving as the data transfer destination.

In addition, in the data transfer system 1, the content recording/reproduction apparatus CRP1 serving as the data transfer source transfers various kinds of data to the content recording/reproduction apparatus CRP2 serving as the data transfer destination at three stages. To be more specific, the content recording/reproduction apparatus CRP1 serving as the data transfer source transfers content data and library-managed data at a first transmission stage, plug-in-managed data at a second transmission stage and database data at a third transmission stage from the hard-disk drive 26 of its own to the hard-disk drive 26 employed in the content recording/reproduction apparatus CRP2 serving as the data transfer destination. Thus, if the content recording/reproduction apparatus CRP1 serving as the data transfer source has functions different from those of the content recording/reproduction apparatus CRP2 serving as the data transfer destination, the content recording/reproduction apparatus CRP1 transfers only at least the content data and the library-managed data to the content recording/reproduction apparatus CRP2. To be more specific, in the data transfer system 1, for content data, the content recording/reproduction apparatus CRP1 serving as the data transfer source has information on layer structures to be used in management of musical contents represented by the content data. Thus, if the content recording/reproduction apparatus CRP1 serving as the data transfer source has functions different from those of the content recording/reproduction apparatus CRP2 serving as the data transfer destination so that a content management program employed in the content recording/reproduction apparatus CRP2 is not capable of handling database data used by a content management program in the management of musical contents in the content recording/reproduction apparatus CRP1, the content recording/reproduction apparatus CRP1 transfers only the content data and the library-managed data from the hard-disk drive 26 of its own to the hard-disk drive 26 employed in the content recording/reproduction apparatus CRP2. Then, the content recording/reproduction apparatus CRP2 serving as the data transfer destination generates its own database data, which can be used by the content management program of its own in the management of musical contents, on the basis of information included in content data as information usable in creation of a layer structure. As described earlier, the information usable in creation of a layer structure is information on attributes of musical contents and information on attributes indirectly related to musical contents.

Thus, even if the content recording/reproduction apparatus CRP1 serving as the data transfer source does not transfer the database data from the hard-disk drive 26 of its own to the hard-disk drive 26 employed in the content recording/reproduction apparatus CRP2 serving as the data transfer destination in the data transfer system 1, the content recording/reproduction apparatus CRP2 is capable of generating its own database data. Therefore, the data transfer system 1 is capable of constructing all but the same content utilization environment in the content recording/reproduction apparatus CRP2 as the environment in the content recording/reproduction apparatus CRP1 and providing the constructed content utilization environment to the user. That is to say, even if the content recording/reproduction apparatus CRP1 serving as the data transfer source does not transfer the database data from to the content recording/reproduction apparatus CRP2 serving as the data transfer destination in a process to transfer content data from the content recording/reproduction apparatus CRP1 to the content recording/reproduction apparatus CRP2 in the data transfer system 1, it is possible to prevent the content recording/reproduction apparatus CRP2 from being put in a state of being incapable of constructing all but the same content utilization environment in the content recording/reproduction apparatus CRP2 as the environment in the content recording/reproduction apparatus CRP1. Thus, the data transfer system 1 is capable of raising the degree of freedom to use the content recording/reproduction apparatus CRP2 serving as the data transfer destination.

By the way, let us assume for example a data transfer system in which an apparatus serving as a data transfer source transmits content data, library-managed data, plug-in-managed data and database data at the same time to an apparatus serving as a data transfer destination. In this case, if the apparatus serving as a data transfer source has functions different from those of the apparatus serving as a data transfer destination, it is necessary to develop a module for making the apparatus serving as a data transfer destination capable of handling all the pieces of data received from the apparatus serving as a data transfer source. The module, which implies a combination of hardware and software in the following description, is used for compensating the data transfer system for as many differences in function between the apparatus as combinations of the different functions. In the case of the data transfer system 1 provided by the present invention, on the other hand, the content recording/reproduction apparatus CRP1 serving as the data transfer source transfers various kinds of data to the content recording/reproduction apparatus CRP2 serving as the data transfer destination at the three stages described earlier. To be more specific, the content recording/reproduction apparatus CRP1 serving as the data transfer source transfers content data and library-managed data at a first transmission stage, plug-in-managed data at a second transmission stage and database data at a third transmission stage from the hard-disk drive 26 of its own to the hard-disk drive 26 employed in the content recording/reproduction apparatus CRP2 serving as the data transfer destination. Thus, if the content recording/reproduction apparatus CRP1 serving as the data transfer source has functions different from those of the content recording/reproduction apparatus CRP2 serving as the data transfer destination, the content recording/reproduction apparatus CRP1 transfers only properly selected pieces of data to the content recording/reproduction apparatus CRP2. The properly selected pieces of data include at least the content data and the library-managed data.

Thus, in the case of the data transfer system 1, different modules for transferring data can each be developed as a module adapted to a data transmission stage. Then, even if the content recording/reproduction apparatus CRP1 serving as the data transfer source in the data transfer system 1 has functions different from those of the content recording/reproduction apparatus CRP2 serving as the data transfer destination, pieces of data to be transferred can be properly selected. Therefore, a module can be selectively developed only for a stage at which the properly selected pieces of data are transferred. Accordingly, in comparison with a data transfer system in which an apparatus serving as a data transfer source transmits all pieces of data at the same transmission stage to an apparatus serving as a data transfer destination, the data transfer system 1 allows a module for transferring data to be developed with ease. In addition, since the data transfer system 1 also allows different modules for transferring data to be developed as modules each adapted to a data transmission stage, the modules can be evaluated for each data transmission stage. Accordingly, in comparison with a data transfer system in which an apparatus serving as a data transfer source transmits all pieces of data at the same transmission stage to an apparatus serving as a data transfer destination, the data transfer system 1 allows a module to be evaluated with ease since the evaluation range and the number of evaluation items can be limited.

### (3) Other Embodiments

In the case of the embodiments described above, the database data used for managing musical contents in the content recording/reproduction apparatus CRP1 serving as the data transfer source includes layer structure information, which is information on the layer structures explained earlier by referring to FIGS. 7 to 12. It is to be noted, however, that the scope of the present invention is not limited to the embodiments. That is to say, it is possible to provide another embodiment in which the database data used for managing musical contents in the content recording/reproduction apparatus CRP1 serving as the.data transfer source may include only specific layer structure information selected from a plurality of pieces of layer structure information. For example, the database data includes specific layer structure information, which is information on only for example the layer structure explained earlier by referring to FIG. 7. In this case, the layer structure information serving as the information on the remaining layer structures can be included in the content data as information on attributes of musical contents and information on attributes indirectly related to musical contents. Thus, the content recording/reproduction apparatus CRP2 serving as the data transfer destination is capable of generating database data on the basis of the layer structure information included in the content data and adding the generated database data to the database data received from the content recording/reproduction apparatus CRP1 serving as the data transfer source. As a result, in accordance with this other embodiment, the amount of the database data transferred from the content recording/reproduction apparatus CRP1 serving as the data transfer source to the content recording/reproduction apparatus CRP2 serving as the data transfer destination can be prevented from increasing. By the way, in the case of this other embodiment, it is possible to provide a configuration in which only the database data received from the content recording/reproduction apparatus CRP1 serving as the data transfer source is used for managing musical contents in the content recording/reproduction apparatus CRP2 serving as the data transfer destination. In this configuration, the user is thus allowed to determine whether or not the layer structure information included in the content data is to be used for managing musical contents and determine a degree to which the layer structure information included in the content data is used if the layer structure information included in the content data is to be used.

In addition, in the case of the embodiments described above, the content recording/reproduction apparatus CRP1 serving as the data transfer source includes layer structure information for the content data. It is to be noted, however, that the scope of the present invention is not limited to the embodiments. That is to say, it is possible to provide a further embodiment in which the content recording/reproduction apparatus CRP1 serving as the data transfer source does not include layer structure information for the content data or includes information on only selected layer structures.

On top of that, in the case of the embodiments described above, if the content recording/reproduction apparatus CRP1 serving as the data transfer source does not transmit database data to the content recording/reproduction apparatus CRP2 serving as the data transfer destination, the content recording/reproduction apparatus CRP2 serving as the data transfer destination generates its own database data, which can be used by the content management program of its own in the management of musical contents, on the basis of information included in content data as information on attributes usable in creation of a layer structure. As described earlier, the information on attributes usable in creation of a layer structure is information on attributes of musical contents and information on attributes indirectly related to musical contents. It is to be noted, however, that the scope of the present invention is not limited to the embodiments. That is to say, it is possible to provide a still further embodiment in which, if the content recording/reproduction apparatus CRP1 serving as the data transfer source does not transmit database data to the content recording/reproduction apparatus CRP2 serving as the data transfer destination, as its own database data, the content recording/reproduction apparatus CRP2 generates layer structure information, which is information on a layer structure, by merely associating pieces of musical data (or pieces of encrypted musical data) each representing a musical content included in the content data with each other in a layer structure without using information on a layer structure.

Furthermore, in the case of the embodiments described above, after the content recording/reproduction apparatus CRP1 serving as the data transfer source transmits all content data, library-managed data, plug-in-managed data and database data to the content recording/reproduction apparatus CRP2 serving as the data transfer destination, the content recording/reproduction apparatus CRP1 sequentially deletes these pieces of data. It is to be noted, however, that the scope of the present invention is not limited to the embodiments. That is to say, it is possible to provide a still further embodiment in which, each time the content recording/reproduction apparatus CRP1 serving as the data transfer source transmits any specific one of the content data, the library-managed data, the plug-in-managed data and the database data to the content recording/reproduction apparatus CRP2 serving as the data transfer destination, the content recording/reproduction apparatus CRP2 requests the content recording/reproduction apparatus CRP1 to delete the transmitted specific data. In this way, each specific one of the content data, the library-managed data, the plug-in-managed data and the database data is deleted upon completion of the transmission of the specific data in accordance with sequential communications between the content recording/reproduction apparatus CRP1 serving as the data transfer source and the content recording/reproduction apparatus CRP2 serving as the data transfer destination.

Moreover, in the case of the embodiments described above, the content recording/reproduction apparatus CRP1 serving as the data transfer source transmits content data, library-managed data, plug-in-managed data and database data to the content recording/reproduction apparatus CRP2 serving as the data transfer destination without invalidating the library-managed data and the plug-in-managed data. It is to be noted, however, that the scope of the present invention is not limited to the embodiments. That is to say, it is possible to provide a still further embodiment in which the content recording/reproduction apparatus CRP1 serving as the data transfer source transmits content data, library-managed data, plug-in-managed data and database data to the content recording/reproduction apparatus CRP2 serving as the data transfer destination by invalidating the library-managed data and the plug-in-managed data. Then, the content recording/reproduction apparatus CRP2 serving as the data transfer destination validates the library-managed data and the plug-in-managed data before recording these pieces of data onto a recording medium.

In addition, in the case of the embodiments described above, if the content recording/reproduction apparatus CRP1 serving as the data transfer source transmits only content data and library-managed data to the content recording/reproduction apparatus CRP2 serving as the data transfer destination, CRP1 deletes only the content data and the library-managed data. It is to be noted, however, that the scope of the present invention is not limited to the embodiments. That is to say, it is possible to provide a still further embodiment in which, even if the content recording/reproduction apparatus CRP1 serving as the data transfer source transmits only content data and library-managed data to the content recording/reproduction apparatus CRP2 serving as the data transfer destination, the content recording/reproduction apparatus CRP1 sequentially deletes all the content data, the library-managed data, the plug-in-managed data and the database data. By deleting all the content data, the library-managed data, the plug-in-managed data and the database data, it is possible to prevent the plug-in-managed data and the database data, which are left in the content recording/reproduction apparatus CRP1 serving as the data transfer source, from being used illegally after the content recording/reproduction apparatus CRP1 transmits only content data and library-managed data to the content recording/reproduction apparatus CRP2 serving as the data transfer destination.

On top of that, in the case of the embodiments described above, in the procedure of processing to transfer data from the content recording/reproduction apparatus CRP1 serving as the data transfer source to the content recording/reproduction apparatus CRP2 serving as the data transfer destination, internal data in each of the content recording/reproduction apparatus CRP1 and the content recording/reproduction apparatus CRP2 is copied to an external recording apparatus as a backup. It is to be noted, however, that the scope of the present invention is not limited to the embodiments. That is to say, it is possible to provide a still further embodiment in which, in accordance with the procedure of processing to transfer data including content data from the content recording/reproduction apparatus CRP1 serving as the data transfer source to the content recording/reproduction apparatus CRP2 serving as the data transfer destination, the data can be transmitted from the content recording/reproduction apparatus CRP1 to the content recording/reproduction apparatus CRP2 without copying internal data in each of the content recording/reproduction apparatus CRP1 and the content recording/reproduction apparatus CRP2 to an external recording apparatus as a backup.

Furthermore, in the case of the embodiments described above, the content recording/reproduction apparatus CRP1 serving as the data transfer source transfers various kinds of data including content data to the content recording/reproduction apparatus CRP2 serving as the data transfer destination. It is to be noted, however, that the scope of the present invention is not limited to the embodiments. That is to say, it is possible to provide a still further embodiment in which data including content data and database data can be transferred back from an external recording apparatus used for storing the data as a backup of data recorded in the content recording/reproduction apparatus CRP1 serving as the data transfer source to the content recording/reproduction apparatus CRP1 in the same way as the data transfer described above. In this still further embodiment, in a process to recover the content recording/reproduction apparatus CRP1 serving as the data transfer source from a failure of losing data such as content data and database data, the data including content data and database data can be transferred back from the external recording apparatus used for storing the data as a backup of data recorded in the content recording/reproduction apparatus CRP1. Thus, the content recording/reproduction apparatus CRP1 serving as the data transfer source can be restored to its original state in a short period of time.

Moreover, in the case of the embodiments described above, the content recording/reproduction apparatus CRP1 serving as the data transfer source transfers various kinds of data to the content recording/reproduction apparatus CRP2 serving as the data transfer destination at three stages on the assumption that the content recording/reproduction apparatus CRP1 has all but the same functions as the content recording/reproduction apparatus CRP2. It is to be noted, however, that the scope of the present invention is not limited to the embodiments. That is to say, it is possible to provide a still further embodiment in which, even if the content recording/reproduction apparatus CRP1 serving as the data transfer source has all but the same functions as the content recording/reproduction apparatus CRP2 serving as the data transfer destination, the content recording/reproduction apparatus CRP1 transfers the content data and the database data to the content recording/reproduction apparatus CRP2 at two or more stages. Much like the embodiments described above, also in the case of this still further embodiment, the content recording/reproduction apparatus CRP2 serving as the data transfer destination is capable of constructing a content utilization environment all but identical with that of the content recording/reproduction apparatus CRP1 serving as the data transfer source and allows the user to use musical contents in the constructed environment.

In addition, in the case of the embodiments described above, the data transfer source apparatus 101 and the content recording/reproduction apparatus CRP1, which have been described before by referring to FIGS. 1 to 19, are each a typical apparatus serving as a data transfer source in accordance with the present invention. It is to be noted, however, that the scope of the present invention is not limited to the embodiments. That is to say, it is possible to provide a still further embodiment in which the present invention is applied to a wide variety of other apparatus capable of serving as a data transfer source. The other apparatus each capable of serving as a data transfer source include an information processing apparatus, a recording/reproduction apparatus and a recording-only apparatus used for recording backups. Examples of the information processing apparatus are a computer, a cell-phone, a PDA (Personal Digital Assistance) and a game machine whereas examples of the recording/reproduction apparatus are a DVD (Digital Versatile Disk) recorder and a hard-disk recorder.

On top of that, in the case of the embodiments described above, the data transfer destination apparatus 103 and the content recording/reproduction apparatus CRP2, which have been described before by referring to FIGS. 1 to 19, are each a typical apparatus serving as data transfer destination in accordance with the present invention. It is to be noted, however, that the scope of the present invention is not limited to the embodiments. That is to say, it is possible to provide a still further embodiment in which the present invention is applied to a wide variety of other apparatus capable of serving as a data transfer destination. The other apparatus each capable of serving as a data transfer destination include an information processing apparatus and a recording/reproduction apparatus. Examples of the information processing apparatus are a computer, a cell-phone, a PDA and a game machine whereas examples of the recording/reproduction apparatus are a DVD recorder and a hard-disk recorder.

Furthermore, in the case of the embodiments described above, the data-transfer source recording medium 102 employed in the data transfer source apparatus 101, that is, the embedded recording medium 8 (or the hard-disk drive 26) employed in the content recording/reproduction apparatus CRP1 as explained earlier by referring to FIGS. 1 to 19 is used as an internal data-transfer source recording medium of an apparatus serving as a data transfer source. It is to be noted, however, that the scope of the present invention is not limited to the embodiments. That is to say, it is possible to provide a still further embodiment in which a wide variety of other data-transfer source recording mediums can be used as an internal data-transfer source recording medium. For example, a recording medium such as a semiconductor memory or a magnetic-optical disk can be used as an internal data-transfer source recording medium.

Moreover, in the case of the embodiments described above, content data configured as a frame (or a packet) used for storing the musical data (or the encrypted musical data) of a musical content as explained earlier by referring to FIGS. 1 to 19 is used as content data, which is recorded on an internal data transfer source recording medium of an apparatus serving as a data transfer source as content data including information on a right to use the musical content. It is to be noted, however, that the scope of the present invention is not limited to the embodiments. That is to say, it is possible to provide a still further embodiment in which various kinds of other data can be used as content data. For example, data of other kinds such as video data, a text or a program data can be used as content data.

In addition, in the case of the embodiments described above, the data-transfer destination recording medium 104 employed in the data transfer destination apparatus 103, that is, the embedded recording medium 8 (or the hard-disk drive 26) employed in the content recording/reproduction apparatus CRP2 as explained earlier by referring to FIGS. 1 to 19 is used as an internal data-transfer destination recording medium of an apparatus serving as a data transfer destination. It is to be noted, however, that the scope of the present invention is not limited to the embodiments. That is to say, it is possible to provide a still further embodiment in which a wide variety of other data transfer-destination recording mediums can be used as an internal data-transfer destination recording medium. For example, a recording medium such as a semiconductor memory or a magnetic-optical disk can be used as an internal data-transfer destination recording medium.

On top of that, in the case of the embodiments described above, as a first invalidation unit for invalidating a relation associating content data recorded on a data-transfer source recording medium with an apparatus serving as a data transfer source in order to invalidate the content data, the first invalidation unit 105 employed in the data transfer source apparatus 101, that is, the control unit 2, right processing unit 9 and music processing unit 10 employed in the content recording/reproduction apparatus CRP1 or the CPU 20 and right processing and music processing module 27 employed in the content recording/reproduction apparatus CRP1 as explained earlier by referring to FIGS. 1 to 19 are used. It is to be noted, however, that the scope of the present invention is not limited to the embodiments. That is to say, it is possible to provide a still further embodiment in which a wide variety of other units can be used as the first invalidation unit. For example, a hardware invalidation circuit for invalidating a relation associating content data recorded on a data-transfer source recording medium with an apparatus serving as a data transfer source in order to invalidate the content data can be used as the first invalidation unit.

Furthermore, in the case of the embodiments described above, as a first intermediate-data generation unit for generating first intermediate data by at least encrypting content data invalidated by the first invalidation unit, the first intermediate data generation unit 106 employed in the data transfer source apparatus 101, that is, the control unit 2 and music processing unit 10 employed in the content recording/reproduction apparatus CRP1 or the CPU 20 and right processing and music processing module 27 employed in the content recording/reproduction apparatus CRP1 as explained earlier by referring to FIGS. 1 to 19 are used. It is to be noted, however, that the scope of the present invention is not limited to the embodiments. That is to say, it is possible to provide a still further embodiment in which a wide variety of other units can be used as the first intermediate-data generation unit. For example, a hardware intermediate-data generation circuit for generating first intermediate data by at least encrypting content data invalidated by the first invalidation unit can be used as the first intermediate-data generation unit.

Moreover, in the case of the embodiments described above, as a first intermediate-data transmitting unit for transmitting first intermediate data generated by the first intermediate-data generation unit to an apparatus serving as a data transfer destination, the first intermediate data transmitting unit 107 employed in the data transfer source apparatus 101, that is, the control unit 2 and interface unit 14 employed in the content recording/reproduction apparatus CRP1 or the CPU 20 and USB interface 32 employed in the content recording/reproduction apparatus CRP1 as explained earlier by referring to FIGS. 1 to 19 are used. It is to be noted, however, that the scope of the present invention is not limited to the embodiments. That is to say, it is possible to provide a still further embodiment in which a wide variety of other units can be used as the first intermediate-data transmitting unit. For example, a hardware intermediate-data transmitting circuit for transmitting first intermediate data generated by the first intermediate-data generation unit to an apparatus serving as a data transfer destination can be used as the first intermediate-data transmitting unit.

On top of that, in the case of the embodiments described above, as a second invalidation unit for invalidating a relation associating database data recorded on a data-transfer source recording medium with an apparatus serving as a data transfer source in order to invalidate the database data, the second invalidation unit 108 employed in the data transfer source apparatus 101, that is, the control unit 2, right processing unit 9 and music processing unit 10 employed in the content recording/reproduction apparatus CRP1 or the CPU 20 and right processing and music processing module 27 employed in the content recording/reproduction apparatus CRP1 as explained earlier by referring to FIGS. 1 to 19 are used. It is to be noted, however, that the scope of the present invention is not limited to the embodiments. That is to say, it is possible to provide a still further embodiment in which a wide variety of other units can be used as the second invalidation unit. For example, a hardware invalidation circuit for invalidating a relation associating database data recorded on a data-transfer source recording medium with an apparatus serving as a data transfer source in order to invalidate the database data can be used as the second invalidation unit.

In addition, in the case of the embodiments described above, as a second intermediate-data generation unit for generating second intermediate data by at least encrypting database data invalidated by the second invalidation unit, the second intermediate data generation unit 109 employed in the data transfer source apparatus 101, that is, the control unit 2 and music processing unit 10 employed in the content recording/reproduction apparatus CRP1 or the CPU 20 and right processing and music processing module 27 employed in the content recording/reproduction apparatus CRP1 as explained earlier by referring to FIGS. 1 to 19 are used. It is to be noted, however, that the scope of the present invention is not limited to the embodiments. That is to say, it is possible to provide a still further embodiment in which a wide variety of other units can be used as the second intermediate-data generation unit. For example, a hardware intermediate-data generation circuit for generating second intermediate data by at least encrypting database data invalidated by the second invalidation unit can be used as the second intermediate-data generation unit.

Moreover, in the case of the embodiments described above, as a second intermediate-data transmitting unit for transmitting second intermediate data generated by the second intermediate-data generation unit to an apparatus serving as a data transfer destination, the second intermediate data transmitting unit 110 employed in the data transfer source apparatus 101, that is, the control unit 2 and interface unit 14 employed in the content recording/reproduction apparatus CRP1 or the CPU 20 and USB interface 32 employed in the content recording/reproduction apparatus CRP1 as explained earlier by referring to FIGS. 1 to 19 are used. It is to be noted, however, that the scope of the present invention is not limited to the embodiments. That is to say, it is possible to provide a still further embodiment in which a wide variety of other units can be used as the second intermediate-data transmitting unit. For example, a hardware intermediate-data transmitting circuit for transmitting second intermediate data generated by the second intermediate-data generation unit to an apparatus serving as a data transfer destination can be used as the second intermediate-data transmitting unit.

Furthermore, in the case of the embodiments described above, as a first deletion unit for deleting content data from an internal data-transfer source recording medium employed in an apparatus serving as a data transfer source upon completion of a process to record the content data onto an internal data-transfer destination recording medium employed in an apparatus serving as a data transfer destination, the first deletion unit 111 employed in the data transfer source apparatus 101, that is, the control unit 2 or CPU 20 employed in the content recording/reproduction apparatus CRP1 as explained earlier by referring to FIGS. 1 to 19 is used. It is to be noted, however, that the scope of the present invention is not limited to the embodiments. That is to say, it is possible to provide a still further embodiment in which a wide variety of other units can be used as the first deletion unit. For example, a hardware deletion circuit for deleting content data from an internal data-transfer source recording medium employed in an apparatus serving as a data transfer source upon completion of a process to record the content data onto an internal data-transfer destination recording medium employed in an apparatus serving as a data transfer destination can be used as the first deletion unit.

Furthermore, in the case of the embodiments described above, as a second deletion unit for deleting database data from an internal data-transfer source recording medium employed in an apparatus serving as a data transfer source upon completion of a process to record the database data onto an internal data-transfer destination recording medium employed in an apparatus serving as a data transfer destination, the second deletion unit 112 employed in the data transfer source apparatus 101, that is, the control unit 2 or CPU 20 employed in the content recording/reproduction apparatus CRP1 as explained earlier by referring to FIGS. 1 to 19 is used. It is to be noted, however, that the scope of the present invention is not limited to the embodiments. That is to say, it is possible to provide a still further embodiment in which a wide variety of other units can be used as the second deletion unit. For example, a hardware deletion circuit for deleting database data from an internal data-transfer source recording medium employed in an apparatus serving as a data transfer source upon completion of a process to record the database data onto an internal data-transfer destination recording medium employed in an apparatus serving as a data transfer destination can be used as the second deletion unit.

In addition, in the case of the embodiments described above, as a first intermediate-data receiving unit for receiving first intermediate data originated by an apparatus serving as a data transfer source as intermediate data generated by the first intermediate-data generation unit by at least encrypting content data recorded on the data-transfer source recording medium after a process carried out by the first invalidation unit to invalidate a relation associating the content data with the apparatus serving as a data transfer source, the first intermediate data receiving unit 115 employed in the data transfer destination apparatus 103, that is, the control unit 2 and interface unit 14 employed in the content recording/reproduction apparatus CRP2 or the CPU 20 and USB interface 32 employed in the content recording/reproduction apparatus CRP2 as explained earlier by referring to FIGS. 1 to 19 are used. It is to be noted, however, that the scope of the present invention is not limited to the embodiments. That is to say, it is possible to provide a still further embodiment in which a wide variety of other units can be used as the first intermediate-data receiving unit. For example, a hardware intermediate-data receiving circuit for receiving first intermediate data originated by an apparatus serving as a data transfer source as intermediate data generated by the first intermediate-data generation unit by at least encrypting content data recorded on the data-transfer source recording medium after a process carried out by the first invalidation unit to invalidate a relation associating the content data with the apparatus serving as a data transfer source can be used as the first intermediate-data receiving unit.

On top of that, in the case of the embodiments described above, as a content generation unit for generating content data by decrypting first intermediate data received by the first intermediate-data receiving unit, the content generation unit 116 employed in the data transfer destination apparatus 103, that is, the control unit 2 and music processing unit 10 employed in the content recording/reproduction apparatus CRP2 or the CPU 20 and right processing and music processing module 27 employed in the content recording/reproduction apparatus CRP2 as explained earlier by referring to FIGS. 1 to 19 are used. It is to be noted, however, that the scope of the present invention is not limited to the embodiments. That is to say, it is possible to provide a still further embodiment in which a wide variety of other units can be used as the content generation unit. For example, a hardware content generation circuit for generating content data by decrypting first intermediate data received by the first intermediate-data receiving unit can be used as the content generation unit.

Furthermore, in the case of the embodiments described above, as a first recording unit for recording content data generated by the content generation unit onto a data-transfer destination recording medium employed in an apparatus serving as a data transfer destination by associating the content data with the apparatus serving as a data transfer destination, the first recording unit 117 employed in the data transfer destination apparatus 103, that is, the control unit 2 and embedded recording medium driving unit 7 or employed in the content recording/reproduction apparatus CRP2 or the CPU 20 employed in the content recording/reproduction apparatus CRP2 as explained earlier by referring to FIGS. 1 to 19 are used. It is to be noted, however, that the scope of the present invention is not limited to the embodiments. That is to say, it is possible to provide a still further embodiment in which a wide variety of other units can be used as the first recording unit. For example, a hardware recording circuit for recording content data generated by the content generation unit onto a data-transfer destination recording medium employed in the apparatus serving as a data transfer destination by associating the content data with the apparatus serving as a data transfer destination can be used as the first recording unit.

In addition, in the case of the embodiments described above, as a second intermediate-data receiving unit for receiving second intermediate data originated by an apparatus serving as a data transfer source as intermediate data generated by the second intermediate-data generation unit by at least encrypting database data recorded on the data-transfer source recording medium after a process carried out by the second invalidation unit to invalidate a relation associating the database data with the apparatus serving as a data transfer source, the second intermediate data receiving unit 118 employed in the data transfer destination apparatus 103, that is, the control unit 2 and interface unit 14 employed in the content recording/reproduction apparatus CRP2 or the CPU 20 and USB interface 32 employed in the content recording/reproduction apparatus CRP2 as explained earlier by referring to FIGS. 1 to 19 are used. It is to be noted, however, that the scope of the present invention is not limited to the embodiments. That is to say, it is possible to provide a still further embodiment in which a wide variety of other units can be used as the second intermediate-data receiving unit. For example, a hardware intermediate-data receiving circuit for receiving second intermediate data transmitted by an apparatus serving as a data transfer source as intermediate data generated by the second intermediate-data generation unit by at least encrypting database data recorded on the data-transfer source recording medium after a process carried out by the second invalidation unit to invalidate a relation associating the database data with the apparatus serving as a data transfer source can be used as the second intermediate-data receiving unit.

On top of that, in the case of the embodiments described above, as a database generation unit for generating database data by decrypting second intermediate data received by the second intermediate-data receiving unit, the database generation unit 119 employed in the data transfer destination apparatus 103, that is, the control unit 2 and music processing unit 10 employed in the content recording/reproduction apparatus CRP2 or the CPU 20 and right processing and music" processing module 27 employed in the content recording/reproduction apparatus CRP2 as explained earlier by referring to FIGS. 1 to 19 are used. It is to be noted, however, that the scope of the present invention is not limited to the embodiments. That is to say, it is possible to provide a still further embodiment in which a wide variety of other units can be used as the database generation unit. For example, a hardware database generation circuit for generating database data by decrypting second intermediate data received by the second intermediate-data receiving unit can be used as the database generation unit.

Furthermore, in the case of the embodiments described above, as a second recording unit for recording database data generated by the database generation unit onto a data-transfer destination recording medium employed in an apparatus serving as a data transfer destination by associating the database data with the apparatus serving as a data transfer destination, the second recording unit 120 employed in the data transfer destination apparatus 103, that is, the control unit 2 and embedded recording medium driving unit 7 or employed in the content recording/reproduction apparatus CRP2 or the CPU 20 employed in the content recording/reproduction apparatus CRP2 as explained earlier by referring to FIGS. 1 to 19 are used. It is to be noted, however, that the scope of the present invention is not limited to the embodiments. That is to say, it is possible to provide a still further embodiment in which a wide variety of other units can be used as the second recording unit. For example, a hardware recording circuit for recording database data generated by the database generation unit onto a data-transfer destination recording medium employed in the apparatus serving as a data transfer destination by associating the database data with the apparatus serving as a data transfer destination can be used as the second recording unit.

The present invention can be applied to an apparatus serving as a data transfer source and an apparatus serving as a data transfer destination. Examples of the apparatus serving as a data transfer source and the apparatus serving as a data transfer destination are a personal computer and a cell-phone.

In addition, it should be understood by those skilled in the art that a variety of modifications, combinations, sub-combinations and alterations may occur in dependence on design requirements and other factors insofar as they are within the scope of the appended claims or the equivalents thereof.

## Claims

1. A data transfer method for transferring content data recorded on a data-transfer source recording medium employed in a data transfer source apparatus as content data including information on rights to use said content data to a data-transfer destination recording medium employed in a data transfer destination apparatus and for transferring database data also recorded on said data-transfer source recording medium as data including information to be used by an application program for managing musical contents represented by said content data as information on a layer structure of said musical contents in a process to manage said musical contents to said data-transfer destination recording medium, said data transfer method comprising the steps of:
driving said data transfer source apparatus to carry out
a first invalidation step of invalidating a relation associating said content data recorded on said data-transfer source recording medium with said data transfer source apparatus in order to invalidate said content data,
a first-intermediate-data generation step of at least encrypting said invalidated content data in order to generate first intermediate data, and
a first-intermediate-data transmitting step of transmitting said first intermediate data to said data transfer destination apparatus;
driving said data transfer destination apparatus to carry out a first recording step of decrypting said first intermediate data received from said data transfer source apparatus in order to generate said content data and recording said content data onto said data-transfer destination recording medium by associating said content data with said data transfer destination apparatus;
driving said data transfer source apparatus to carry out
a second invalidation step of invalidating a relation associating said database data recorded on said data-transfer source recording medium with said data transfer source apparatus in order to invalidate said database data,
a second-intermediate-data generation step of at least encrypting said invalidated database data in order to generate second intermediate data, and
a second-intermediate-data transmitting step of transmitting said second intermediate data to said data transfer destination apparatus;
driving said data transfer destination apparatus to carry out a second recording step of decrypting said second intermediate data received from said data transfer source apparatus in order to generate said database data and recording said database data onto said data-transfer destination recording medium by associating said database data with said data transfer destination apparatus; and
driving said data transfer source apparatus to carry out
a first deletion step of deleting said content data from said data-transfer source recording medium after a process carried out by said data transfer destination apparatus to record said content data onto said data-transfer destination recording medium, and
a second deletion step of deleting said database data from said data-transfer source recording medium after a process carried out by said data transfer destination apparatus to record said database data onto said data-transfer destination recording medium.

2. The data transfer method according to claim 1 whereby:
said data transfer source apparatus carries out only said first invalidation step, said first-intermediate-data generation step, said first-intermediate-data transmitting step and said first deletion step whereas said data transfer destination apparatus carries out only said first recording step; and
said data transfer destination apparatus carries out a database data generating step for an application program of said data transfer destination apparatus from said content data recorded on said data-transfer destination recording medium.

3. The data transfer method according to claim 1 whereby:
said information on said layer structure of said musical contents is embedded in said content data recorded on said data-transfer destination recording medium at said first recording step; and
said data transfer destination apparatus carries out a database data generating step on the basis of information embedded in said content data as information on said layer structure of said musical contents.

4. The data transfer method according to claim 3 wherein said information on said layer structure is indirect attribute information related to directly related information, which is information directly related to said content data.

5. A data transfer source apparatus for transferring content data recorded on a data-transfer source recording medium employed in said data transfer source apparatus as content data including information on rights to use said content data to a data-transfer destination recording medium employed in a data transfer destination apparatus and for transferring database data also recorded on said data-transfer source recording medium as data including information to be used by an application program for managing musical contents represented by said content data as information on a layer structure of said musical contents in a process to manage said musical contents to said data-transfer destination recording medium, said data transfer source apparatus comprising:
a first invalidation unit for invalidating a relation associating said content data recorded on said data-transfer source recording medium with said,data transfer source apparatus in order to invalidate said content data;
a first-intermediate-data generation unit for at least encrypting said content data invalidated by said first invalidation unit in order to generate first intermediate data;
a first-intermediate-data transmitting unit for transmitting said first intermediate data generated by said first-intermediate-data generation unit to said data transfer destination apparatus;
a second invalidation unit for invalidating a relation associating said database data recorded on said data-transfer source recording medium with said data transfer source apparatus in order to invalidate said database data;
a second-intermediate-data generation unit for at least encrypting said database data invalidated by said invalidation unit in order to generate second intermediate data;
a second-intermediate-data transmitting unit for transmitting said second intermediate data generated by said second-intermediate-data generation unit to said data transfer destination apparatus;
a first deletion unit for deleting said content data from said data-transfer source recording medium after completion of a process carried out by said data transfer destination apparatus to record said content data onto said data-transfer destination recording medium; and
a second deletion unit for deleting said database data from said data-transfer source recording medium after completion of a process carried out by said data transfer destination apparatus to record said database data onto said data-transfer destination recording medium.

6. A data transfer destination apparatus for transferring content data recorded on a data-transfer source recording medium employed in a data transfer source apparatus as content data including information on rights to use said content data to a data-transfer destination recording medium employed in said data transfer destination apparatus and for transferring database data also recorded on said data-transfer source recording medium as data including information to be used by an application program for managing musical contents represented by said content data as information on a layer structure of said musical contents in a process to manage said musical contents to said data-transfer destination recording medium, said data transfer destination apparatus comprising:
a first-intermediate-data receiving unit for receiving transmitted first intermediate data generated by said data transfer source apparatus by at least encrypting said content data recorded on said data-transfer source recording medium after a process to invalidate said content data by invalidating a relation associating said content data with said data transfer source apparatus;
a content generation unit for generating said original content data by decrypting said first intermediate data received by said first-intermediate-data receiving unit;
a first data recording unit for recording said content data generated by said content generation unit onto said data-transfer destination recording medium by associating said content data with said data transfer destination apparatus;
a second-intermediate-data receiving unit for receiving transmitted second intermediate data generated by said data transfer source apparatus by at least encrypting said database data recorded on said data-transfer source recording medium after a process to invalidate said database data by invalidating a relation associating said database data with said data transfer source apparatus;
a database generation unit for generating said original database data by decrypting said second intermediate data received by said second-intermediate-data receiving unit; and
a second data recording unit for recording said database data generated by said database generation unit onto said data-transfer destination recording medium by associating said database data with said data transfer destination apparatus.

7. A storage medium for storing a data transfer program for executing an information apparatus to transfer content data recorded on an internal data-transfer source recording medium employed in said information apparatus as content data including information on rights to use said content data to a data-transfer destination recording medium employed in a data transfer destination apparatus and to transfer database data also recorded on said internal data-transfer source recording medium as data including information to be used by an application program for managing musical contents represented by said content data as information on a layer structure of said musical contents in a process to manage said musical contents to said data-transfer destination recording medium, wherein said data transfer program comprises:
a first invalidation step of invalidating a relation associating said content data recorded on said data-transfer source recording medium with said data transfer source apparatus in order to invalidate said content data,
a first-intermediate-data generation step of at least encrypting said invalidated content data in order to generate first intermediate data, and
a first-intermediate-data transmitting step of transmitting said first intermediate data to said data transfer destination apparatus;
a second invalidation step of invalidating a relation associating said database data recorded on said data-transfer source recording medium with said data transfer source apparatus in order to invalidate said database data;
a second-intermediate-data generation step of at least encrypting said invalidated database data in order to generate second intermediate data;
a second-intermediate-data transmitting step of transmitting said second intermediate data to said data transfer destination apparatus;
a first deletion step of deleting said content data from said data-transfer source recording medium after completion of a process carried out by said data transfer destination apparatus to record said content data onto said data-transfer destination recording medium; and
a second deletion step of deleting said database data from said data-transfer source recording medium after completion of a process carried out by said data transfer destination apparatus to record said database data onto said data-transfer destination recording medium.

8. A storage medium for storing a transferred-data recording program for executing an information apparatus to record content data transferred from a data-transfer source recording medium employed in a data transfer source apparatus as content data including information on rights to use said content data onto an internal data-transfer destination recording medium employed in said information apparatus and to record database data also transferred from said data-transfer source recording medium as data including information to be used by an application program for managing musical contents represented by said content data as information on a layer structure of said musical contents in a process to manage said musical contents onto said internal data-transfer destination recording medium, wherein said transferred-data recording program comprises:
a first data recording step of receiving transmitted first intermediate data to decrypt said first intermediate data generated by said data transfer source apparatus by at least encrypting said content data recorded on said data-transfer source recording medium after a process to invalidate said content data by invalidating a relation associating said content data with said data transfer source apparatus in order to generate said content data and recording said content data onto said internal data-transfer destination recording medium by associating said content data with said information apparatus; and
a second-immediate-data recording step of receiving transmitted second intermediate data to decrypt said second intermediate data generated by said data transfer source apparatus by at least encrypting said database data recorded on said data-transfer source recording medium after a process to invalidate said database data by invalidating a relation associating said database data with said data transfer source apparatus in order to generate said database data and recording said database data onto said internal data-transfer destination recording medium by associating said database data with said information apparatus.
